# EUROPEAN PATENT SPECIFICATION

(11) **EP 1 820 193 B1**
(45) Date of publication and mention of the grant of the patent: **22.04.2009**
(21) Application number: 04800998.9
(22) Date of filing: 10.11.2004
(51) Int. Cl.: G11B 23/28

(54) **METHOD OF AUTHENTICATING TAGGED POLYMERS**
VERFAHREN ZUR AUTHENTIFIZIERUNG MARKIERTER POLYMERE
PROCEDE D'AUTHENTIFICATION DE POLYMERS MARQUES

(30) Priority: 26.11.2003 US 723810
(43) Date of publication of application: 22.08.2007
(73) Proprietor: Sabic Innovative Plastics IP B.V., 4612 PX Bergen op Zoom (NL)
(72) Inventor: EVANS, Thomas, Mt. Vernon, IN 47620 (US); MARUVADA, Sriramakrishna, Evansville, IN 47711 (US); PAI-PARANJAPE, Vandita, Evansville, IN 47712 (US); SCHOTTLAND, Philippe, Evansville, IN 47712 (US)
(74) Representative: Modiano, Micaela Nadia
(86) International application number: PCT/US2004/037687
(87) International publication number: WO 2005/055236

(56) References cited:
- EP-A- 0 625 766
- WO-A-98/29238
- DE-B- 1 011 851
- GB-A- 1 487 967
- US-A1- 2003 021 998

## Description

### BACKGROUND OF INVENTION

The inventions relate to authentication technology for polymer based articles, particularly to methods of authenticating polymer based articles, methods of facilitating such authentication, and methods of making articles capable of authentication. The invention particularly relates to nondestructive authentication technology for use in data storage media made of polycarbonate such as compact disks (CDs) and digital versatile disks (DVDs).

Data storage media or optical storage media such as CDs and DVDs traditionally contain information such as machine-readable code, audio, video, text, and/or graphics. Data storage media often include one or more substrates made of polymers such as polycarbonate.

A major problem confronting the various makers and users of data storage media is the unauthorized reproduction or copying of information by unauthorized manufactures, sellers and/or users. Such unauthorized reproduction or duplication of data storage media is often referred to as piracy and can occur in a variety of ways, including consumer level piracy at the point of end use as well as wholesale duplication of data, substrate and anti-piracy information at the commercial level. Regardless of the manner, piracy of data storage media deprives legitimate software and entertainment content providers and original electronic equipment manufacturers significant revenue and profit.

Attempts to stop piracy at the consumer level have included the placement of electronic anti-piracy signals on information carrying substrates along with the information sought to be protected. The machine readers and players of such data storage media are configured to require the identification of such anti-piracy signals prior to allowing access to the desired information. Theoretically, consumer level duplications are unable to reproduce these electronic anti-piracy signals on unauthorized copies and hence result in duplicates and copies that are unusable.

However, numerous technologies to thwart such consumer level anti-piracy technologies have been and continue to be developed. Moreover, commercial level duplications have evolved to the point that unauthorized duplicates now contain the original electronic anti-piracy circuit, code, etc. For example, commercial level duplication methods include pit copying, radio frequency (RF) copying, "bit to bit" copying and other mirror image copying techniques which result in the placement of the anti-piracy signal on the information carrying substrate of the duplicate along with the information sought to be protected. In other cases, the computer code is modified to remove all anti-piracy information to provide free access to the desired data.

One anti-piracy technology aimed at combating these more sophisticated consumer and commercial level reproduction and copying practices involves the placement of 'tags' or authentication markers in substrates used in the construction of data storage media. Such tags or authentication markers can be detected at one or more points along the data storage media manufacturing or distribution chain or by the end use reader or player used to access the data on a particular CD or DVD.

For example, in Cyr et al., U.S. Patent No. 6,099,930, tagging materials are placed in materials such as digital compact disks. A near-infrared fluorophore is incorporated into the compact disk via coating, admixing, blending or copolymerization. Fluorescence is detectable when the fluorophore is exposed to electromagnetic radiation having a wavelength ranging from 670 to 1100 nanometers.

Hubbard et al., U.S. Patent 6,514,617 discloses a polymer comprising a tagging material wherein the tagging material comprises an organic fluorophore dye, an inorganic fluorophore, an organometallic fluorophore, a semi-conducting luminescent nanoparticle, or combination thereof, wherein the tagging material has a temperature stability of at least about 350 degrees C and is present in a sufficient quantity such that the tagging material is detectable via a spectrofluorometer at an excitation wavelength from about 100 nanometers to about 1100 nanometers.

WO 00/14736 relies on one or more intrinsic physical or chemical characteristics of the substrate materials to distinguish unauthorized duplications of information-carrying substrates. Such anti-piracy characteristics may be based on performance characteristics such as (for example in the case of an optical disk) the weight and/or density of the disk; the spin rate of the disk; the acceleration and deceleration of the disk; the inertia of the disk; the spectral characteristics such as reflectance of the disk; the optical characteristics such as light transmittance of the disk; the water absorption and dimensional stability of the disk; the data transfer rate of the disk; and the degree of wobble of the disk, or combinations of such characteristics.

However, the ability of unauthorized manufacturers, sellers, and/or users of data storage media to circumvent such practices continues to grow with increasingly sophisticated practices. For example, unauthorized manufacturers of data storage media are known to illegally obtain legitimately manufactured-tagged substrates for the purposes of making unauthorized reproductions. Moreover, the high profitability of piracy has enabled some unauthorized manufacturers and their suppliers to reverse engineer tagged substrate materials for the purpose of identifying previously unknown tags and producing similarly tagged data media storage substrate.

There is therefore a need to find methods of tagging and authenticating data storage media substrates that are currently unknown and/or unavailable to unauthorized manufacturers, sellers, and/or users of data storage media. In particular, it would be desirable to find authentication markers or combinations of authentication markers for use in data storage media substrates for the purposes of authenticating data storage media substrates and data storage media. Such markers would be desirably difficult to obtain, reproduce, use, and/or identify.

### BRIEF DESCRIPTION OF THE INVENTION

Disclosed herein are embodiments for methods of authenticating an article or tagged polymer.

In one embodiment, disclosed is a method of authenticating that a test polymer is a tagged polymer comprising a substrate polymer, a compound comprising a forensic authentication marker, and a dynamic response authentication marker, said forensic authentication marker being present in the tagged polymer in an amount sufficient to be detected by a forensic analytical technique and said dynamic response authentication marker being present in the tagged polymer in an amount sufficient to be detected by a dynamic response analytical technique, said method of authenticating comprising testing the test polymer for the forensic authentication marker using a forensic analytical technique, testing the test polymer for the dynamic response authentication marker using a dynamic response analytical technique, and authenticating that a test polymer is a tagged polymer if the forensic authentication marker and dynamic authentication marker are detected.

In another embodiment, a method for authenticating an article comprises incorporating together a substrate polymer, a compound comprising a forensic authentication marker, and a dynamic response authentication marker to provide a tagged polymer, forming a tagged article from said tagged polymer, and authenticating that an article is a tagged article by detecting the forensic authentication marker using a forensic analytical technique, and detecting the dynamic response authentication marker using a dynamic response analytical technique, wherein said forensic authentication marker is present in the tagged polymer in an amount sufficient to be detected by a forensic analytical technique, and said dynamic response authentication marker is present in an amount sufficient to be detected by a dynamic response analytical technique.

In another embodiment, disclosed is a method of authenticating an article, comprising incorporating together a substrate polymer and a compound comprising a forensic authentication marker to provide a tagged polymer, said forensic authentication marker being present in the tagged polymer in an amount sufficient to be detected by a forensic analytical technique, forming a tagged article from said tagged polymer, and authenticating that an article is a tagged article by detecting the forensic authentication marker using a forensic analytical technique.

### BRIEF DESCRIPTION OF THE DRAWINGS

Referring now to the figures, which are exemplary, not limiting:
Figure 1 represents a graphical representation of shear viscosity expressed in Pa-s versus shear rate expressed in s⁻¹ (or Hz) for Formulations A and B of Example 1 as measured at 300° C on a capillary rheometer.
Figure 2 is a spectrum of an approximately 2.5% solution of DMBPC copolymer in deuterated chloroform (99% purity) as analyzed by a Varian Mercury-400 proton nuclear magnetic resonance (NMR) spectrometer.
Figure 3 is a graphical representation of a comparison of the fluorescence emission of Formulations A and B when excited at 355 nm showing unique spectral signature of a dynamic response authentication marker that is a long stokes shift green emitting UV fluorophore dye in Formulation B.
Figure 4 is a graphical comparison of the absorption spectra of Formulations A and B.
Figure 5 is a graphical comparison of the transmission spectra of Formulations A and B.

### DETAILED DESCRIPTION

Multi-level tagging methods of facilitating the authentication of polymer-based or polymer-containing articles are provided. Such methods result in the production of tagged polymers that can be used to make tagged articles. The presence of the particularly disclosed authentication markers in the tagged polymers or articles made therefrom allows for one or more parties at any point along the manufacturing chain, distribution chain, point of sale or point of use of the tagged polymer or article to confirm or identify one or more pieces of information. Illustrative examples of the type of information which might be identified or confirmed include the source of the tagged polymer, the source of the tagged article, the composition of the tagged polymer, whether the tagged article is an unauthorized reproduction or duplication, the lot number of the tagged polymer, the serial number of the tagged article, and the like.

In one exemplary embodiment, the tagged polymer or article will comprise a substrate polymer and a compound comprising a forensic authentication marker.

In another exemplary embodiment, the tagged polymer or article will comprise a substrate polymer, a compound comprising a forensic authentication marker, and a dynamic response authentication marker.

Some possible examples of substrate polymers which can be utilized include, but are not limited to, amorphous, crystalline and semi-crystalline thermoplastic materials: polyvinyl chloride, polyolefins (including, but not limited to, linear and cyclic polyolefins and including polyethylene, chlorinated polyethylene, polypropylene, and the like), polyesters (including, but not limited to, polyethylene terephthalate, polybutylene terephthalate, polycyclohexylmethylene terephthalate, and the like), polyamides, polysulfones (including, but not limited to, hydrogenated polysulfones, and the like), polyimides, polyether imides, polyether sulfones, polyphenylene sulfides, polyether ketones, polyether ether ketones, ABS resins, polystyrenes (including, but not limited to, hydrogenated polystyrenes, syndiotactic and atactic polystyrenes, polycyclohexyl ethylene, styrene-co-acrylonitrile, styrene-co-maleic anhydride, and the like), polybutadiene, polyacrylates (including, but not limited to, polymethylmethacrylate, methyl methacrylate-polyimide copolymers, and the like), polyacrylonitrile, polyacetals, polycarbonates, polyphenylene ethers (including, but not limited to, those derived from 2,6-dimethylphenol and copolymers with 2,3,6-trimethylphenol, and the like), ethylene-vinyl acetate copolymers, polyvinyl acetate, liquid crystal polymers, ethylene-tetrafluoroethylene copolymer, aromatic polyesters, polyvinyl fluoride, polyvinylidene fluoride, polyvinylidene chloride, Teflons, as well as thermosetting resins such as epoxy, phenolic, alkyds, polyester, polyimide, polyurethane, mineral filled silicone, bis-maleimides, cyanate esters, vinyl, and benzocyclobutene resins, in addition to blends, copolymers, mixtures, reaction products and composites comprising a of the foregoing plastics.

As used herein, the terms "polycarbonate", "polycarbonate composition", and "composition comprising aromatic carbonate chain units" includes compositions having structural units of the formula (I): 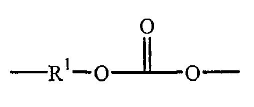 in which at least about 60 percent of the total number of R¹ groups are aromatic organic radicals and the balance thereof are aliphatic, alicyclic, or aromatic radicals. Polycarbonates suitable for this invention can be produced by various methods including interfacial, melt, activated carbonate melt, and solid-state processes. For example, polycarbonate can be produced by the interfacial reaction of dihydroxy compounds. Preferably, R¹ is an aromatic organic radical and, more preferably, a radical of the formula (II):

-A¹-Y¹-A²-

wherein each of A¹ and A² is a monocyclic divalent aryl radical and Y¹ is a bridging radical having one or two atoms which separate A¹ from A². In an exemplary embodiment, one atom separates A¹ from A². Illustrative, non-limiting examples of radicals of this type are --O--, --S--, --S(O)--, --S(O₂)--, --C(O)--, methylene, cyclohexyl-methylene, 2-[2,2,1]-bicycloheptylidene, ethylidene, isopropylidene, neopentylidene, cyclohexylidene, cyclopentadecylidene, cyclododecylidene, and adamantylidene. The bridging radical Y¹ can be a hydrocarbon group or a saturated hydrocarbon group such as methylene, cyclohexylidene or isopropylidene.

Polycarbonates can be produced by the interfacial reaction of dihydroxy compounds in which only one atom separates A¹ and A². As used herein, the term "dihydroxy compound" includes, for example, bisphenol compounds having general formula (III) as follows: 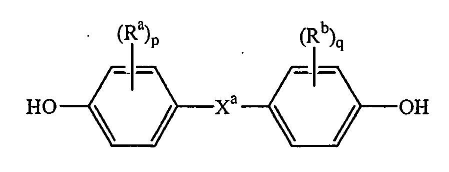 wherein R^{a} and R^{b} each represent a halogen atom or a monovalent hydrocarbon group and may be the same or different; p and q are each independently integers from 0 to 4; and X^{a} represents one of the groups of formula (IV): 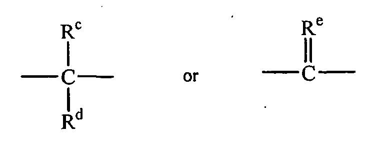 wherein R^{c} and R^{d} each independently represent a hydrogen atom or a monovalent linear or cyclic hydrocarbon group and R^{e} is a divalent hydrocarbon group.

Some illustrative, non-limiting examples of suitable dihydroxy compounds include dihydric phenols and the dihydroxy-substituted aromatic hydrocarbons disclosed by name or formula (generic or specific) in U.S. Pat. No. 4,217,438. A nonexclusive list of specific examples of the types of bisphenol compounds that may be represented by formula (III) includes the following: 1,1-bis(4-hydroxyphenyl)methane; 1,1-bis(4-hydroxyphenyl)ethane; 2,2-bis(4-hydroxyphenyl)propane (hereinafter "bisphenol A" or "BPA"); 2,2-bis(4-hydroxyphenyl)butane; 2,2-bis(4-hydroxyphenyl)octane; 1,1-bis(4-hydroxyphenyl)propane; 1,1-bis(4-hydroxyphenyl)n-butane; bis(4-hydroxyphenyl)phenylmethane; 2,2-bis(4-hydroxy-1-methylphenyl)propane; 1,1-bis(4-hydroxy-t-butylphenyl)propane; bis(hydroxyaryl)alkanes such as 2,2-bis(4-hydroxy-3-bromophenyl)propane; 1,1-bis(4-hydroxyphenyl)cyclopentane; and bis(hydroxyaryl)cycloalkanes such as 1,1-bis(4-hydroxyphenyl)cyclohexane; and the like as well as combinations comprising a of the foregoing.

It is also possible to employ polycarbonates resulting from the polymerization of two or more different dihydric phenols or a copolymer of a dihydric phenol with a glycol or with a hydroxy- or acid-terminated polyester or with a dibasic acid or with a hydroxy acid or with an aliphatic diacid in the event a carbonate copolymer rather than a homopolymer is desired for use. Polyarylates and polyester-carbonate resins or their blends can also be employed. Branched polycarbonates are also useful, as well as blends of linear polycarbonate and a branched polycarbonate. The branched polycarbonates may be prepared by adding a branching agent during polymerization.

These branching agents are well known and may comprise polyfunctional organic compounds containing at least three functional groups which may be hydroxyl, carboxyl, carboxylic anhydride, haloformyl and mixtures comprising a of the foregoing. Specific examples include trimellitic acid, trimellitic anhydride, trimellitic trichloride, tris-p-hydroxy phenyl ethane, isatin-bis-phenol, tris-phenol TC (1,3,5-tris((p-hydroxyphenyl)isopropyl)benzene), tris-phenol PA (4(4(1,1-bis(p-hydroxyphenyl)-ethyl) alpha,alpha-dimethyl benzyl)phenol), 4-chloroformyl phthalic anhydride, trimesic acid and benzophenone tetracarboxylic acid, and the like. The branching agents may be added at a level of about 0.05 to about 2.0 weight percent. Branching agents and procedures for making branched polycarbonates are described in U.S. Pat. Nos. 3,635,895 and 4,001,184. All types of polycarbonate end groups are herein contemplated.

In one embodiment, the substrate polymer will be a polycarbonate based on bisphenol A, in which each of A¹ and A² is p-phenylene and Y¹ is isopropylidene. In one embodiment, the average molecular weight of the polycarbonate is about 5,000 to about 100,000. In another exemplary embodiment, the average molecular weight of a polycarbonate used as the substrate polymer will be about 10,000 to about 65,000, while in another exemplary embodiment, a polycarbonate used as the substrate polymer will have an average molecular weight of about 15,000 to about 35,000.

Polycarbonates produced by a melt process or activated carbonate melt process such of those listed in US Patents No. 5,151491 and 5,142,018 typically contain a significantly higher concentration of Fries product. Although the generation of significant Fries product can lead to polymer branching, resulting in uncontrollable melt behavior, such product can be readily identified by a forensic analytical technique. Suitable analytical techniques include, for instance, the proton NMR signal produced by the aromatic protons of the Fries repeat unit or by fluorescence spectroscopy. As used herein, the terms "Fries" and "Fries product" denote a repeating unit in polycarbonate having the formula (V): 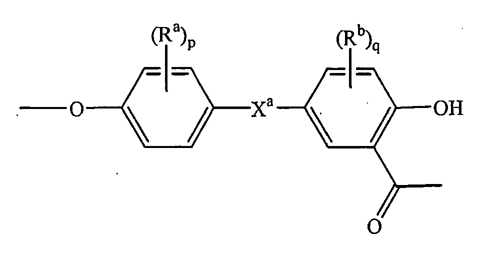 wherein Xa is a bivalent radical as described in connection with Formula (III) described above.

Polycarbonate compositions suitable for use as the substrate polymer may also include various additives ordinarily incorporated in resin compositions of this type. Such additives are, for example, fillers or reinforcing agents; heat stabilizers; antioxidants; light stabilizers; plasticizers; antistatic agents; mold releasing agents; additional resins; blowing agents; and the like, as well as combinations comprising a of the foregoing additives. Examples of fillers or reinforcing agents include glass fibers, asbestos, carbon fibers, silica, talc and calcium carbonate. Examples of heat stabilizers include triphenyl phosphite, tris-(2,6-dimethylphenyl)phosphite, tris-(mixed mono- and di-nonylphenyl)phosphite, dimethylbenene phosphonate and trimethyl phosphate. Examples of antioxidants include octadecyl-3-(3,5-di-tert-butyl-4-hydroxyphenyl)propionate, and pentaerythrityl-tetrakis[3-(3,5-di-tert-butyl-4-hydroxyphenyl)propionate]. Examples of light stabilizers include 2-(2-hydroxy-5-methylphenyl)benzotriazole, 2-(2-hydroxy-5-tert-octylphenyl)-benzotriazole and 2-hydroxy-4-n-octoxy benzophenone. Examples of plasticizers include dioctyl-4,5-epoxy-hexahydrophthalate, tris-(octoxycarbonylethyl)isocyanurate, tristearin and epoxidized soybean oil. Examples of the antistatic agent include glycerol monostearate, sodium stearyl sulfonate, and sodium dodecylbenzenesulfonate. Examples of mold releasing agents include stearyl stearate, beeswax, montan wax and paraffin wax. Examples of other resins include but are not limited to polypropylene, polystyrene, polymethyl methacrylate, and polyphenylene oxide. Combinations of any of the foregoing additives may be used. Such additives may be mixed at a suitable time during the mixing of the components for forming the composition.

In one embodiment the tagged polymer compositions may also contain colorants that will impart a specific appearance to the tagged polymer or tagged article under normal lighting conditions (e.g. daylight). In a preferred embodiment, the colorants used exhibit no or only very weak fluorescence under UV excitation compared to the dynamic response marker discussed below. Suitable colorants include but are not limited to non-fluorescent derivatives of the following dye families: anthraquinones, methine, perinones, azo, anthrapyridones and quinophtalones.

The methods as disclosed herein also include the use of a compound comprising a forensic authentication marker as well as a dynamic response authentication marker.

Forensic authentication markers as used herein refers to one or more organic or inorganic functional groups or structures that are not originally present in the chemical structure of the substrate polymer in an amount or configuration detectable by a forensic analytical technique but which, when incorporated with the substrate polymer, result in a tagged polymer that has a unique signal detectable by a forensic analytical method. For example, although certain functional groups may be present in the substrate polymer, for example, methylene groups, it is an aspect of the disclosed methods that they may not be present in the substrate polymer in the same amount or configuration that gives rise to detection by a forensic analytical method and the subsequent identification of a particular structure and configuration as a forensic authentication marker. Thus, in one exemplary embodiment, the substrate polymer is substantially free of forensic authentication markers prior to the formation of the tagged polymer. In another exemplary embodiment, the substrate polymer will be substantially free of the forensic authentication marker intended to be detected by the forensic analytical technique.

In one embodiment, the compound comprising the forensic authentication marker will only be present in the tagged polymer in an amount that is detectable by a forensic analytical technique but that does not affect one or more physical or performance properties of the substrate polymer. Illustrative examples of physical properties and performance properties of the substrate polymer that are not affected by the addition of the compound in an amount sufficient to be detected by a forensic analytical technique include optical, physical, rheological, thermal, and processing properties. Illustrative optical properties include light transmission and birefringence. Examples of physical properties include moisture absorption, coefficients of thermal expansion and the like, while examples of mechanical properties include flex modulus, tensile modulus, impact resistance and the like. Illustrative rheological properties include the viscosity of the substrate polymer, especially melt viscosity and melt viscosity rate as measured per ISO 1133 method. Thermal properties include glass transition temperature of the substrate and heat deflection temperature. Illustrative molding properties include the required molding temperature(s), including nozzle and barrel temperatures, injection rates and the like.

In one embodiment, the optical and rheological properties of the substrate polymer will be unaffected by the addition of the compound containing the forensic authentication marker. In another exemplary embodiment, the rheological properties of the substrate polymer will be unaffected by the addition of the compound containing the forensic authentication marker. In another exemplary embodiment, the optical properties of the substrate polymer will be unaffected by the addition of the compound containing the forensic authentication marker.

In another embodiment, the physical and performance properties of the tagged polymer are substantially equivalent to the physical and performance properties of the substrate polymer prior to the addition of the compound in an amount sufficient to be detected by a forensic analytical technique. That is, in this particular embodiment, the compound is added to the substrate polymer in an amount that is detectable by a forensic analytical technique but that does not substantially affect the physical and performance properties of the substrate polymer. As a result, in one embodiment, one or more of the physical and/or performance properties of the resultant tagged polymer will vary from those of the substrate polymer no more than or equal to about ± 20% of the value of the particular performance and/or physical property of the substrate polymer. In one particular embodiment, the physical and performance properties of the resultant tagged polymer will only vary from those of the polymer in an amount of about ± 0 to 15%. In one exemplary embodiment, one or more physical and/or performance properties of the resultant tagged polymer will vary from those of the substrate polymer no more than or equal to about ± 10%. In another exemplary embodiment, the physical and performance properties of the resultant tagged polymer will vary from those of the polymer in an amount of less than or equal to about ± 5% of the value of the particular performance and/or physical property of the substrate polymer.

Illustrative examples of suitable forensic authentication markers include alkyl groups of 2 or more carbons, cycloaliphatic groups of 3 or more carbons, the -OCH₃ and CH₃Si groups, divalent substituted phenol groups such as eugenol, terminal substituted phenol groups such as p-cumylphenol (PCP), isophtalate and/or terephtalate groups, methyl groups attached to an aryl moiety (such as a phenol derivative), and the like. In one exemplary embodiment, the forensic authentication markers will be at least one of the group consisting of alkyl groups of from 2 to 40 carbon atoms and cycloaliphatic groups of from 3 to 40 carbon atoms.

In one exemplary embodiment, a suitable alkyl group will be the methylene group. In one embodiment, the forensic authentication markers will include methylene groups of the structure -(CH₂)ₙ- wherein n is a number of no less than or equal to about 2. In another embodiment, n will be a number of no more than or equal to about 30. In yet another exemplary embodiment, n will be a number of about 4 to about 14.

Compounds comprising one or more forensic authentication markers may be in the form of monomers, compounds, oligomers, or polymers. Monomer as used herein refers to a single polymerizable unit. Oligomer as used herein refers to materials having from two to ten repeating units. Polymer as used herein refers to materials having more than ten repeating units. Copolymer as used herein refers to a material having more than ten total repeating units wherein at least two of the repeating units are different. Copolymer and polymer are used interchangeably herein. Compound as used herein refers to materials that do not comprise repeating units but may be polymerizable. The compound may comprise one or more heteratoms. Illustrative examples of heteroatoms include Si, O, N, S, F, and combinations thereof. In one particular embodiment, compounds comprising a forensic authentication marker herein do not include light changeable materials that absorb, reflect, emit or otherwise alter electromagnetic radiation directed there to. In yet another embodiment, compounds comprising a forensic authentication marker will not scatter, absorb or reflect light in such a way that the playability of optical data storage media is affected when the tagged polymer is used to make such articles.

The compound may generally have an average molecular weight number of no less than or equal to about 2,000 Daltons, and generally of about 5,000 to 200,000 Daltons. In one embodiment, the compound will have a number average molecular weight of about 10,000 to about 100,000 Daltons. In one exemplary embodiment, the compound will have a number average molecular weight of about 15,000 to 45,000.

In one embodiment, the compound will be a polymer or copolymer that is miscible with the substrate polymer. In one exemplary embodiment, the compound will be a polymer that is miscible with the substrate polymer when the substrate polymer is polycarbonate or a polycarbonate blend. Miscible as used herein refers to a polymer that upon incorporation with the substrate polymer shows no phase separation at the concentration levels for the compound disclosed herein. Phase separation may be detected in the form of optical properties such as a haze. In general a miscible transparent copolymer will have less than 1% haze per ASTM D003 when measured at a thickness of 3.2 mm.

In one embodiment of the disclosed methods, the compound containing the forensic authentication marker will be a copolymer that is subject to proprietary controls such as technology agreements, patents, license agreements and the like. In another embodiment of the disclosed methods, the compound will be a copolymer that is difficult to manufacture without significant capital investment in equipment and/or processes. In one exemplary embodiment, the compound will be subject to proprietary controls and require extensive manufacturing investment for its production. In this way, the compound having the forensic authentication marker is less likely to be obtained by third parties attempting to manufacture unauthorized versions of the tagged polymer or articles made from such materials. Limits on the commercial availability of certain compounds increases the likelihood that certain forensic authentication markers will maintain their value as 'tagging' tools in the authentication of polymer substrates used in the manufacture of data storage media due to their unavailability to illegitimate users and makers of data storage media substrates.

In one embodiment, the compound will be a polycarbonate copolymer comprising at least 5 mole % of structural units having the formula (VI): 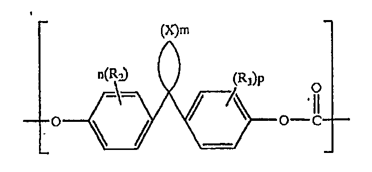 where R₁ and R₂ are independently selected from the group consisting of C₁ -C₆ alkyl; X represents CH₂ ; m is an integer from 4 to 7; n is an integer from 1 to 4; and p is an integer from 1 to 4, with the proviso that a of R₁ or R₂ is in the 3 or 3' position. In one exemplary embodiment, the structural unit is referred to as DMBPC wherein m is 6, R₁ and R₃ are methyl groups in the 3 and 3' positions, and both n and p are 1.

Unless otherwise stated, "mol %" in reference to the composition of a polycarbonate in this specification is based upon 100 mol % of the repeating units of the polycarbonate. For instance, "a polycarbonate comprising 90 mol % of BPA refers to a polycarbonate in which 90 mol % of the repeating units are residues derived from BPA diphenol or its corresponding derivative(s). Corresponding derivatives include but are not limited to, corresponding oligomers of the diphenols; corresponding esters of the diphenol and their oligomers; and the corresponding chloroformates of the diphenol and their oligomers. The terms "residues" and "structural units", used in preference to the constituents of the polycarbonate, are synonymous throughout the specification.

In one exemplary embodiment, the compound will be a polycarbonate copolymer comprising about 1 to 100 mole % of structural units of formula (VI) and in another, from 10 to 75 mole % of structural units of formula (VI). In one particularly exemplary embodiment, the compound containing the forensic authentication markers will be a copolymer comprising no less than or equal to about 15 mole % of the structural units of formula (VI) wherein m is 6, R₁ and R₃ are methyl groups in the 3 and 3' positions, and both n and p are 1. The remaining structural residues may be obtained from other components of polycarbonate as described above with regards to the substrate polymer.

In another embodiment, the compound will be a polyestercarbonate copolymer comprising no less than or equal to about 0.5 mole % of structural units having the formula (VII): 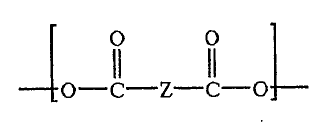 where Z is a C₁ -C₄₀ branched or unbranched alkyl or branched or unbranched cycloalkyl. In one exemplary embodiment, Z will have from 6 to 18 carbon atoms and in another from 10 to 14 carbon atoms. Representative units of structure (VII) include, but are not limited to, residues of dodecanedioic acid, sebacic acid, adipic acid, octadecanedioic acid, octadec-9-enedioic acid, 9-carboxyoctadecanoic acid and 10-carboxyoctadecanoic acid and mixtures thereof. In one particularly exemplary embodiment, the copolymer will comprise residues of dodecanedioic acid (DDDA).

In one embodiment, the copolymer will be a polyestercarbonate copolymer comprising about 0.5 to 20 mole % of structural units of formula (VII) and in another, from 1 to 10 mole % of structural units of formula (VII).

In one embodiment, the tagged polymer contains more than one forensic authentication marker. An example of a copolymer where 2 different forensic authentication markers are present is a polycarbonate copolymer of DMBPC and DDDA. If two taggants need to be used, both markers should be present at a detectable level for the forensic analytical technique selected. In the case of polycarbonate copolymers of DMBPC and DDDA, the minor forensic marker is typically DDDA that is preferably used at a level greater than or equal to 0.05% by weight in the final tagged polymer.

In another embodiment, the compound will be an arylate polymer or copolymer comprising no less than or equal to about 5 mole % structural units of the formula (VIII) which is often referred to as an ITR or ITR-PC copolymer: 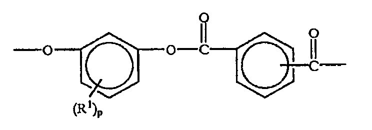 wherein each R₁ is a substituent, especially halo or C₁₋₁₂ alkyl, and p is 0-3.

In one embodiment, the arylate polymer or copolymer useful as the copolymer will also comprise structural units of the formula (IX): 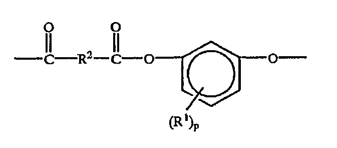 wherein R₁ and p are as previously defined and R₂ is a divalent C₄₋₁₂ aliphatic, alicyclic or mixed aliphatic-alicyclic radical. The units of formula (IX) contain a resorcinol or substituted resorcinol moiety in which any R₁ groups may be C₁₋₄ alkyl; i.e., methyl, ethyl, propyl or butyl. In one embodiment R₁ groups are primary or secondary groups. In a particular embodiment R₁ groups are methyl. In some embodiments R₁ groups are resorcinol moieties, in which p is zero, although moieties in which p is 1 are also suitable for use herein. Said resorcinol moieties are most often bound to isophthalate and/or terephthalate moieties. Arylate polymers useful as the copolymer are disclosed in U.S. Patent 6,607,814. In one exemplary embodiment, the compound will be a copolymer comprising 5 to 30 mole percent of structural units of formula (VIIII) and 95 to 70 mole percent of structural units of formula (X). Such copolymers, which are disclosed for example in U.S. Patent 6,559,270, are often referred to as ITR-PC copolymers. In another exemplary embodiment, the ITR-PC copolymer comprises 10 to 20 mole percent structural units of formula (VIII) and 90 to 80 mole percent of structural units of formula (X).

In yet another embodiment, the compound containing the forensic authentication markers may be a polysiloxane containing block copolymer. Suitable polysiloxane copolymers are those disclosed in U.S. patents 6,072,011, 5,530,083 and 5,616,674, and consisting essentially of (1) polycarbonate blocks having recurring units of the structure (X): 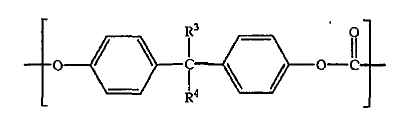 where R₃ and R₄ are each independently selected from hydrogen, hydrocarbyl or halogen-substituted hydrocarbyl, preferably methyl; and (2) polysiloxane blocks of the structure (XI): 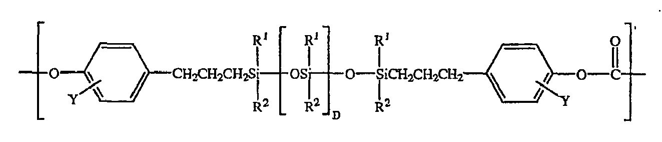 where R₁ and R₂ are each independently hydrogen, hydrocarbyl or halogen-substituted hydrocarbyl, in one exemplary embodiment R₁ is methyl and R₂ is methyl or phenyl, and where D is an integer of about 10 to about 120, in another embodiment about 10 to 50; and Y is hydrogen, hydrocarbyl, hydrocarbyloxy or halogen, in one exemplary embodiment methoxy; and where the weight percentage of blocks of structure (1) is about 98 to about 92.0% of the copolymers and the weight percentage of siloxane from the blocks of structure (2) is about 2 to 8%.

The term "hydrocarbyl" as used herein with respect to polysiloxane containing block copolymers means the monovalent moiety obtained upon removal of a hydrogen atom from a parent hydrocarbon. Representative of hydrocarbyl are alkyl of 1 to 25 carbon atoms, inclusive such as methyl, ethyl, propyl, butyl, pentyl, hexyl, heptyl, octyl, nonyl, undecyl, decyl, dodecyl, octadecyl, nonodecyl eicosyl, heneicosyl, docosyl, tricosyl, tetracosyl, pentacosyl and the isomeric forms thereof; aryl of 6 to 25 carbon atoms, inclusive, such as phenyl, tolyl, xylyl, napthyl, biphenyl, tetraphenyl and the like; aralkyl of 7 to 25 carbon atoms, inclusive, such as benzyl, phenethyl, phenpropyl, phenbutyl, phenhexyl, napthoctyl and the like; cycloalkyl of 3 to 8 carbon atoms, inclusive, such as cyclopropyl, cyclobutyl, cyclopentyl, cyclohexyl, cycloheptyl, cyclooctyl and the like.

The term "alkylene" as used herein with respect to polysiloxane containing block copolymers means the divalent moiety obtained on removal of two hydrogen atoms, each from a non-adjacent carbon atom of a parent hydrocarbon and includes alkylene of 3 to 15 carbon atoms, inclusive, such as 1,3-propylene, 1,4-butylene, 1,5-pentylene, 1,8-octylene, 1,10-decylene and the like.

Polysiloxane containing block copolymers suitable for use a the copolymer may be prepared by the reaction of a carbonate forming precursor, such as phosgene, with a bisphenol of the formula (XII):

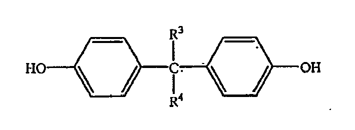

Where R₃ and R₄ are as defined immediately above; and a siloxane diol of the structure depicted by the formula (XIII): 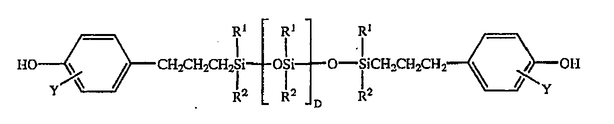 where R₁ and R₂, Y and D are as defined above. In one exemplary embodiment, the species of the structures (XIII) is that in which R₁ and R₂ are methyl, Y is methoxy ortho to the phenolic hydroxyl, and D is about 10 to 50. In one particularly exemplarly embodiment, D will be from about 10 to about 25 for the species of structures (XIII) for optical media applications.

The bisphenol compounds of the formula (XII) are represented by 2,2-bis-(4-hydroxyphenyl)propane (or bisphenol-A); 2,4'-dihydroxydiphenyl methane; bis-(2-hydroxyphenyl)methane; bis-(4-hydroxyphenyl)methane; bis-(4-hydroxy-5-nitrophenyl)methane; bis-(4-hydroxy-2,6-dimethyl-3-methoxyphenyl)methane; 1,1-bis-(4-hydroxyphenyl)ethane; 1,2-bis-(4-hydroxphenyl)ethane; 1,1-bis-(4-hydroxy-2-chlorophenyl)ethane; 1,1-bis-(2,5-dimethyl-4-hydroxyphenyl)ethane; 1,3-bis-(3-methyl-4-hydroxyphenyl)propane; 2,2-bis-(3-phenyl-4-hydroxyphenyl)propane; 2,2-bis-(3-isopropyl-4-hydroxyphenyl)propane; 2,2-bis-(4-hydroxyphenyl)propane; 2,2-bis-(4-hydroxyphenyl)pentane; 3,3-bis-(4-hydroxyphenyl)pentane; 2,2-bis-(4-hydroxyphenyl)heptane; bis-(4-hydroxyphenyl)phenylmethane; bis-(4-hydroxyphenyl)cyclohexymethane; 1,2-bis-(4-hydroxyphenyl)-1,2-bis-(phenyl)propane; 2,2-bis-(4-hydroxyphenyl)-1-phenylpropane; and the like.

The siloxane diols (XIII) depicted above as precursors of the siloxane block may be characterized as bisphenolsiloxanes. The preparation of these bisphenolsiloxanes is accomplished by the addition of a polydiorganosiloxane to a phenol containing an alkenyl substituent, according to the schematic formula (XV): 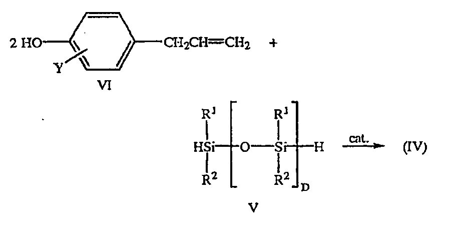 wherein R₁, R₂, Y and D are as defined above.

In one embodiment, the forensic authentication marker may be an end group (also referred to as "end-cap") that is typically obtained from a monophenol derivative such as p-cumylphenol as disclosed in U.S. Patent 5,959,065. The role of these end groups is to terminate the polymer/copolymer chain and thus provide a polymer that is less likely to react with other species in the formulation. In one embodiment, the forensic authentication marker is an end group that amounts to between about 0.1 and 20 mole percent of the compound containing the forensic authentication marker. In a preferred embodiment, the end group amounts to between about 0.2 and 5 mole percent of the compound containing the forensic authentication marker.

Examples of suitable end groups include p-cumylphenol as well as phenol and paratertiarybutyl phenol and mixtures of p-cumylphenol with phenol and/or paratertiarybutyl phenol. In one embodiment, no less than or equal to about 50 weight percent of the endcapping group will be paracumylphenol, while in another embodiment, the endcapping group will comprise greater than or equal to about 70 weight percent of the endcapping group. In one exemplary embodiment, the endcapping group will consist of paracumyl phenol. The compound comprising a forensic authentication marker is added to the polymer in an amount sufficient to be detected by a forensic analytical technique. In one embodiment, the forensic authentication markers will be present in the tagged polymer in an amount of no more than 10.0% by weight. In another embodiment, the forensic authentication markers will be present in the tagged polymer in an amount of less than 5.0% by weight, based on the total weight of the tagged polymer. In one exemplary embodiment, the forensic authentication markers will be present in the tagged polymer in an amount of less than 2.0% by weight, based on the total weight of the tagged polymer. In yet another exemplary embodiment, the forensic authentication markers will be present in the tagged polymer in an amount of less than 1.0% by weight, based on the total weight of the tagged polymer. In one embodiment, the forensic authentication markers will be present in the tagged polymer in an amount of at least 0.005% by weight, based on the total weight of the tagged polymer. Thus, in one exemplary embodiment, the forensic authentication markers will be present in the tagged polymer in an amount of about 0.005% to 10.0% by weight, based on the total weight of the tagged polymer, preferably about 0.01% to about 5.0% by weight, more preferably about 0.05% to about 2.0% by weight, and most preferably about 0.1% to 1.0% by weight.

Forensic analytical techniques as used herein refer to analytical methods that generally require significant expenditures with respect to equipment and/or preparation and are capable of detecting a forensic authentication marker in the amounts used here such that they produce a signal or response that confirms the presence of the forensic authentication marker in the tagged polymer. Illustrative examples include resonance spectroscopy methods such as nuclear magnetic resonance (NMR) and electron spin resonance (ESR), x-ray photon electron spectroscopy- electron spectroscopy for chemical analysis (XPS-ESCA), energy dispersive x-ray spectroscopy (EDX) coupled to scanning electron microscopy (SEM-EDX), atomic absorption, and the like. Methods such as NIR, MIR, FTIR; x-ray irradiation, mass spectroscopy, and neutron spectroscopy are not within the scope of forensic analytical techniques. In one exemplary embodiment the forensic analytical techniques will provide a determination of the structure of the forensic authentication marker as opposed to measuring a signal such as fluorescence or absorption. Such structural techniques include NMR, (XPS-ESCA), and ESR. In one exemplary embodiment, the forensic analytical technique will be at least one of NMR or ESR. In one particularly exemplary embodiment, the forensic analytical technique will be NMR, especially those having multinuclear capabilities, such as carbon NMR, proton NMR, fluorine NMR, silicon NMR, phosphor NMR, nitrogen NMR and the like. In one exemplary embodiment the NMR technique used as the forensic analytical technique will be proton NMR.

Dynamic response authentication marker as used herein refers to spectroscopic tags, thermochromic compounds and optically variable tags.

Spectroscopic tags include organic fluorophores, inorganic fluorophores, organometallic fluorophores, luminescent nanoparticles, and combinations thereof. Spectroscopic tags make it possible to determine thermal history and degradation of a polymer. In addition, the tagging materials used are insensitive to polymer additives and to chemical and physical aging of the polymer.

In one embodiment, for example when the substrate polymer is polycarbonate, these spectroscopic tagging materials are selected from classes of dyes that exhibit high robustness against ambient environmental conditions and temperature stability of at least about 350°C, preferably at least about 375°C, and more preferably at least about 400°C. Typically, the spectroscopic tagging materials have temperature stability for a time period greater than or equal to about 10 minutes and preferably, greater than or equal to about 1 minute, and more preferably, greater than or equal to about 20 seconds.

The excitation range of these dynamic response authentication materials is typically about 100 nanometers to about 1100 nanometers, and more typically about 200 nanometers to about 1000 nanometers, and most typically about 250 nanometers to about 950 nanometers. The emission range of these tagging materials is typically about 250 nanometers to about 2500 nanometers.

In one embodiment, the dynamic response authentication marker will have a maximum excitation in the UV range of from 100 to 400 nm. In another embodiment, the maximum excitation in the UV range will be from 250-400 nm. In one embodiment, the maximum excitation in the UV range will be from 300-400 nm. In one exemplary embodiment, the maximum excitation in the UV range will be from 320-400 nm while in another exemplary embodiment, the maximum excitation in the UV range will be from about 330 to 390 nm.

In one embodiment, the dynamic response authentication material will have a maximum fluorescence emission in the visible range of from 400 to 800nm. In another embodiment, the dynamic response authentication marker will have a maximum fluorescence emission in the visible range of from 450 to 750 nm. In yet another exemplary embodiment, the dynamic response authentication marker will have a maximum fluorescence emission in the visible range of from 480 to 670 nm. In one particularly exemplary embodiment, the dynamic response authentication marker will have a maximum fluorescence emission in the visible range of from 570 to 670 nm. In another particularly exemplary embodiment, the dynamic response authentication marker will have a maximum fluorescence emission in the visible range of from about 480 to 570 nm.

In one embodiment, the dynamic response authentication material will be a fluorophore that absorbs in the UV and emits in the visible light range. In one exemplary embodiment, the dynamic response authentication material will be a long stokes shift UV fluorophore dye. "Stokes shift" as used herein refers to the distance between the maximum excitation or absorption and the maximum emission at fluorescence. Materials are generally referred to as "long Stokes shift" materials when the Stokes shift is greater than or equal to about 50 nm.

In one embodiment, the dynamic response authentication marker will have a long stokes shift of at least or equal to about 50 nm, in another embodiment a long stokes shift of at least or equal to about 100 nm; in another, a long stokes shift of at least or equal to about 150 nm. In one particularly exemplary embodiment, the dynamic response authentication marker will have a long stokes shift of at least or equal to about 200 nm.

In one embodiment, a suitable dynamic response authentication marker will have a long stokes shift of from about 75 to about 250, in another embodiment, from about 100 to 175 nm. Suitable dynamic response authentication marker that are commercially available include green, yellow, orange and red emitting UV fluorophores from the Lumilux CD pigment series produced by Honeywell of Seelze, Germany. In the case of optical media applications, it is important to select the fluorophore so that it does not impact playability. This generally implies that the fluorophore needs to soluble in the substrate polymer or dispersed in domains that will not scatter light (i.e. use of nano-particles preferably smaller than 50 nm). If the refractive index of the fluorophore is close to the one of the substrate polymer, larger particles may be used provided that the manufacturing process of the tagged polymer does not generate aggregates that scatter light. Unacceptable level of scattering can be determined by measurement of haze as per ASTM D1003. Generally, a haze value of less than about 1% at 3.2 mm is considered acceptable for optical media applications.

The spectroscopic tags useful as dynamic response authentication markers include organic, inorganic, or organometallic fluorophores. Exemplary fluorophores include, but are not limited to, known dyes such as polyazaindacenes or coumarins, including those set forth in U.S. Pat. No. 5,573,909. Other suitable families of dyes include lanthanide complexes, hydrocarbon and substituted hydrocarbon dyes; polycyclic aromatic hyrdocarbons; scintillation dyes (preferably oxazoles and oxadiazoles); aryl- and heteroaryl-substituted polyolefins (C2 -C8 olefin portion); carbocyanine dyes; phthalocyanine dyes and pigments; oxazine dyes; carbostyryl dyes; porphyrin dyes; acridine dyes; anthraquinone dyes; anthrapyridone dyes; arylmethane dyes; azo dyes; diazonium dyes; nitro dyes; quinone imine dyes; tetrazolium dyes; thiazole dyes; perylene dyes, perinone dyes, bis-benzoxazolylthiophene (BBOT), naphthalimide dyes, benzimidazole dyes, indigoid or thioindigoid dyes, and xanthene or thioxanthene dyes. Fluorophores also include anti-stokes shift dyes which absorb in the near infrared wavelength and emit in the visible wavelength.

The following is a partial list of commercially available suitable luminescent dye: 5-Amino-9-diethyliminobenzo(a)phenoxazonium Perchlorate 7-Amino-4-methylcarbostyryl, 7-Amino-4-methylcoumarin, 7-Amino4-trifluoromethylcoumarin, 3-(2'-Benzimidazolyl)-7-N,N-diethylamninocoumarin, 3-(2'-Benzothiazolyl)-7-diethylaminocoumarin, 2-(4-Biphenylyl)-5-(4-t-butylphenyl)-1,3,4-oxadiazole, 2-(4-Biphenylyl)-5-phenyl-1,3,4-oxadiazole, 2-(4-Biphenyl)-6-phenylbenzoxazole-1,3, 2,5-Bis-(4-biphenylyl)-1,3,4-oxadiazole, 2,5-Bis-(4-biphenylyl)-oxazole, 4,4'-Bis-(2-butyloctyloxy)-p-quaterphenyl, p-Bis(o-methylstyryl)-benzene, 5,9-Diaminobenzo(a)phenoxazonium Perchlorate, 4-Dicyanomethylene-2-methyl-6-(p-dimethylaminostyryl)-4H-pyran, 1,1'-Diethyl-2,2'-carbocyanine Iodide, 1,1'-Diethyl-4,4'-carbocyanine Iodide, 3,3'-Diethyl-4,4',5,5'-dibenzothiatricarbocyanine Iodide, 1,1'-Diethyl-4,4'-dicarbocyanine Iodide, 1,1'-Diethyl-2,2'-dicarbocyanine Iodide, 3,3'-Diethyl-9,11 - neopentylenethiatricarbocyanine Iodide, 1,3'-Diethyl-4,2'-quinolyloxacarbocyanine Iodide, 1,3'-Diethyl-4,2'-quinolylthiacarbocyanine Iodide, 3-Diethylamino-7-diethyliminophenoxazonium Perchlorate, 7-Diethylamino-4-methylcoumarin, 7-Diethylamino-4-trifluoromethylcoumarin, 7-Diethylaminocoumarin, 3,3'-Diethyloxadicarbocyanine Iodide, 3,3'-Diethylthiacarbocyanine Iodide, 3,3'-Diethylthiadicarbocyanine Iodide, 3,3'-Diethylthiatricarbocyanine Iodide, 4,6-Dimethyl-7-ethylaminocoumarin, 2,2'-Dimethyl-p-quaterphenyl, 2,2-Dimethyl-p-terphenyl, 7-Dimethylamino-1 -methyl-4-methoxy-8-azaquinolone-2, 7-Dimethylamino-4-methylquinolone-2, 7-Dimethylamino-4-trifluoromethylcoumarin, 2-(4-(4-Dimethylaminophenyl)-1,3-butadienyl)-3-ethylbenzothiazolium Perchlorate, 2-(6-(p-Dimethylaminophenyl)-2,4-neopentylene-1,3,5-hexatrienyl)-3-methylbe nzothiazolium Perchlorate, 2-(4-(p-Dimethylaminophenyl)-1,3-butadienyl)-1,3,3-trimethyl-3H-indolium Perchlorate, 3,3'-Dimethyloxatricarbocyanine Iodide, 2,5-Diphenylfuran, 2,5-Diphenyloxazole, 4,4'-Diphenylstilbene, 1-Ethyl-4-(4-(p-Dimethylaminophenyl)-1,3-butadienyl)-pyridinium Perchlorate, 1-Ethyl-2-(4-(p-Dimethylaminophenyl)-1,3-butadienyl)-pyridinium Perchlorate, 1-Ethyl-4-(4-(p-Dimethylaminophenyl)-1,3-butadienyl)-quinolium Perchlorate, 3-Ethylamino-7-ethylimino-2,8-dimethylphenoxazin-5-ium Perchlorate, 9-Ethylamino-5-ethylamino-10-methyl-5H-benzo(a)phenoxazonium Perchlorate, 7-Ethylamino-6-methyl-4-trifluoromethylcoumarin, 7-Ethylamino-4-trifluoromethylcoumarin, 1,1',3,3,3',3'-Hexamethyl-4,4',5,5'-dibenzo-2,2'-indotricarboccyanine Iodide, 1,1',3,3,3',3'-Hexamethylindodicarbocyanine Iodide, 1,1',3,3,3',3'-Hexamethylindotricarbocyanine Iodide, 2-Methyl-5-t-butyl-p-quaterphenyl, N-Methyl-4-trifluoromethylpiperidino-<3,2-g>coumarin, 3-(2'-N-Methylbenzimidazolyl)-7-N,N-diethylaminocoumarin, 2-(1 -Naphthyl)-5-phenyloxazole, 2,2'-p-Phenylen-bis(5-phenyloxazole), 3,5,3"",5""-Tetra-t-butyl-p-sexiphenyl, 3,5,3"",5""-Tetra-t-butyl-p-quinquephenyl, 2,3,5,6-1H,4H-Tetrahydro-9-acetylquinolizino-<9,9a,1-gh>coumarin, 2,3,5,6-1H,4H-Tetrahydro-9-carboethoxyquinolizino-<9,9a,1-gh>coumarin, 2,3,5,6-1H,4H-Tetrahydro-8-methylquinolizino-<9,9a, 1-gh>coumarin, 2,3,5,6-1H,4H-Tetrahydro-9-(3-pyridyl)-quinolizino-<9,9a,1-gh> coumarin, 2,3,5,6-1H,4H-Tetrahydro-8-trifluoromethylquinolizino-<9,9a,1-gh> coumarin, 2,3,5,6-1H,4H-Tetrahydroquinolizino-<9,9a,1-gh>coumarin, 3,3',2",3"'-Tetramethyl-p-quaterphenyl, 2,5,2"",5"'-Tetramethyl-p-quinquephenyl, P-terphenyl, P-quaterphenyl, Nile Red, Rhodamine 700, Oxazine 750, Rhodamine 800, IR 125, IR 144, IR 140, IR 132, IR 26, IR5, Diphenylhexatriene, Diphenylbutadiene, Tetraphenylbutadiene, Naphthalene, Anthracene, 9,10-diphenylanthracene, Pyrene, Chrysene, Rubrene, Coronene, Phenanthrene, anthrapyridones, and naphtamimide.

Spectroscopic tags useful as dynamic response authentication markers may also include luminescent nanoparticles of sizes from about 1 nanometer to about 50 nanometers. Exemplary luminescent nanoparticles include, but are not limited to, semi-conducting nanoparticles of CdS, ZnS, Cd₃ P2, PbS, or combinations thereof.

Other luminescent nanoparticles also include rare earth aluminates or silicates including, but not limited to, strontium aluminates doped with Europium and Dysprosium.

In one embodiment, spectroscopic tagging materials such as perylenes such as Anthra[2,1,9-def:6,5,10-d'e'f']diisoquinoline-1,3,8,10(2H,9H)-tetrone, 2,9-bis[2,6-bis(1-methyethyl)phenyl]-5,6,12,13-tetraphenoxy are utilized as the dynamic response authentication markers.

In another embodiment, the dynamic response markers will be thermochromic compounds. The term 'thermochromic compounds' generally refers to compounds that change color as a function of temperature. 'Thermochromic compounds' as used herein refers to compounds that when exposed to electromagnetic radiation of a particular wavelength, have a first signal at a first temperature, and a second signal at a second temperature, the second temperature being greater than the first temperature and the first and second signals being different. The first temperature is sometimes referred to as the 'cold' state and the second temperature as the 'hot' state.

'Signal' as used herein refers to a response detectable by an analytical method such as vibrational spectroscopy, fluorescence spectroscopy, luminescence spectroscopy, electronic spectroscopy and the like and combinations thereof. Examples of vibrational spectroscopies are Raman, infrared, Surface Enhanced Raman and Surface Enhanced Resonance Raman spectroscopies. In one exemplary embodiment, signal refers to a response detectable by an analytical method such as fluorescence spectroscopy, luminescence spectroscopy, and the like and combinations thereof. In another exemplary embodiment, signal refers to a response detectable by fluorescence spectroscopy.

In one embodiment, the signal of the thermochromic compound will reflect changes in the fluorescence or luminescence of the thermochromic compound. The changes in fluorescence emission can be detected by observing changes in the complete emission spectrum or changes in local parts of the spectrum (i.e. by looking at the discrete intensity of the fluorescence emission at the peak location of the tag emission or by looking at ratios of fluorescence intensity at selected wavelengths that are known to exhibit different values in the "hot" and "cold" state). For example, in one embodiment, the signal may be the intensity or location of the fluorescence emitted at a particular excitation wavelength or range. In one exemplary embodiment, the signal of the thermochromic compound will be evaluated as the fluorescence emitted by a tagged polymer at a particular excitation wavelength, i.e., the authentication wavelength as discussed below. In one embodiment, the fluorescence intensity changes over time in response to a heat pulse will be used as a signal.

In one exemplary embodiment the first and second signals of the thermochromic compound will be different by at least about 5%, based on the fluorescence intensity or ratio of fluorescence intensity of the thermochromic compound. In another embodiment, the first and second signals of the thermochromic compound will be different by at least about 10 nm, based on the fluorescence peak location of the thermochromic compound.

Suitable thermochromic compounds for use in the disclosed methods will generally be organic materials that are selected to be chemically compatible with the substrate polymer and have a heat stability consistent with engineering plastics compounding and in particular with the processing conditions of the polymer substrate. In one embodiment, the stable thermochromic compounds will be conjugated polymers containing aromatic and/or heteroatomic units exhibiting thermochromic properties.

Illustrative examples of suitable thermochromic compounds include poly(3-alkylthiophene)s, poly(3,4-alkylenedioxythiophene)s, alkyl/aryl substituted poly(isothianaphtenes)s and corresponding copolymers, blends or combinations of the corresponding monomers.

In one embodiment, the polythiophene is generally of the structure (XVI): 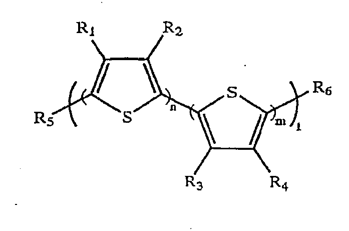 wherein R₁-R₆ is a hydrogen, substituted or unsubstituted alkyl radical, substituted or unsubstituted alkoxy radical, substituted or unsubstituted aryl radical, substituted or unsubstituted thioalkyl radical, substituted or unsubstituted trialkylsilyl radical, substituted or unsubstituted acyl radical, substituted or unsubstituted ester radical, substituted or unsubstituted amine radical, substituted or unsubstituted amide radical, substituted or unsubstituted heteroaryl or substituted or unsubstituted aryl radical, n is between 1 and 1000, m is between 0 and 1000, and 1 is between 1 and 1000. In another embodiment, R₁-R₂ or R₃-R₄ comprise a 5 or 6 membered ring. In another embodiment, R₁-R₂ or R₃-R₄ comprise a ring with 6 or more members. In yet another embodiment, R₂-R₃ are bridged forming a ring with 6 or more members.

In synthesizing a polythiophene for a specific design temperature, e.g. for the series of poly(3-alkylthiophene)s there is roughly an inverse correlation with the length of the n-alkane substituent and the temperature of the thermochromic transition for both the regiorandom (R₁=alkyl, R₄=alkyl, n≅0.8, m≅0.2, 1=40-80, R₂, R₃, R₅, R₆=H) and regioregular (R₁=alkyl, n=40-80, m=0, R₂, R₅, R₆=H), poly(3-n-alkylthiophene)s. For regiorandom polymers longer substituents such as n-hexadecyl have lower temperature thermochromic transitions (81°C) than shorter chain substituents such as n-octyl (130°C). The regioregular polymers have higher thermochromic transitions than the regiorandom polymers but the same inverse correlation with chainlength is observed. The n-hexadecyl and n-octyl have thermochromic transition from about 125 to about 175°C. As long as the number of thiophene units in the polymer is approximately greater than sixteen the thermochromic transition is molecular weight independent. Oligothiophenes (n+m+1<16) have lower temperature thermochromic transitions than the polythiophenes (n+m+1>16).

In one exemplary embodiment, the thermochromic compound will be a regiorandom polymer. In one exemplary embodiment, the thermochromic compound will be a regiorandom polymer in the poly(3-alkylthiophene) series. In another exemplary embodiment, the thermochromic compound will be an oligothiophene wherein (n+m+1<16).

In one embodiment, the thermochromic compound utilized as a dynamic response authentication marker will be a thermochromic compound having a thermochromic transition temperature of no less than or equal to about -30°C. In one embodiment, the thermochromic compound utilized will be a thermochromic compound having a thermochromic transition temperature of no more than or equal to about 250°C. In another embodiment, the thermochromic compound utilized will be a thermochromic compound having a thermochromic transition temperature of about 35 to about 195°C. In another exemplary embodiment, the thermochromic compound utilized as a dynamic response authentication marker will be a thermochromic compound having a thermochromic transition temperature of about 45 to about 135°C.

In another embodiment, the dynamic response authentication marker will be an optically variable tag. Suitable optically variable tags for use in the disclosed methods will generally be fluorescent or luminescent materials that are selected to be chemically compatible with the polymer matrix and have a heat stability consistent with engineering plastics compounding and in particular with the processing conditions of the polymer substrate. In one embodiment, the optically variable tags will be selected for their relatively good heat stability and compatibility with polycarbonate.

In one embodiment, the stable optically variable tags will be at least one of oxadiazole derivatives or luminescent conjugated polymers. Illustrative examples of suitable luminescent conjugated polymers are blue emitting luminescent polymers, such as poly-paraphenylenevinylene derivatives. Illustrative examples of suitable oxadiazole derivatives include oxadiazole derivatives substituted with a biphenyl or substituted byphenyl in the 2-position and with a phenyl derivative in the 5-positio.

In one exemplary embodiment, the optically variable tag will be one of tert-butyl phenyl oxadiazole, bis(Biphenylyl) oxadiazole, or a mixture of tert-butyl phenyl oxadiazole and bis(Biphenylyl) oxadiazole. In one exemplary embodiment, the optically variable tag will be tert-butyl phenyl oxadiazole. In another exemplary embodiment, the optically variable tag will bis(Biphenylyl) oxadiazole.

Optically variable tags suitable for use as dynamic response authentication markers will have a fluorescence emission whose wavelength and intensity change over time. In one embodiment, the optically variable tag will have a fluorescence emission characterized by a first peak position at an initial time and a second peak position at a second, later time. The second peak position may generally be identified in terms of the shift from the first peak position. In another embodiment, the first peak position of the fluorescence emission will be at about 160 to about 1100 nm, while the other peak position of the fluorescence emission will be shifted from the first peak by about 2 to about 300 nm. In one exemplary embodiment, a first peak will be at about 250 to about 750 nm, while the second peak may be shifted by about 5 to about 200 nm. In another exemplary embodiment, the first peak will be at about 300 to about 700 nm, while the second peak will be shifted by about 10 to about 100 nm.

In another embodiment, the tagged polymers containing the optically variable tags disclosed herein may be identified via an authenticating signal that is the predetermined change of the fluorescence ratio of emission intensities at two or more pre-selected wavelengths. These pre-selected wavelengths are selected so that the fluorescence ratio of a polymer without the optically variable tags changes in one direction, normally a decrease, while the fluorescence ratio of a tagged polymer comprising the optically variable tags changes in the opposite direction, i.e., normally an increase.

Pre-selected wavelengths are preferably selected as the maximum fluorescence emission. Typically, the first pre-selected wavelength corresponds to the first peak emission while the second pre-selected wavelength corresponds to the second peak emission. In one embodiment, the pre-selected wavelengths will be about 160 to 1100 nm. In one exemplary embodiment, one pre-selected wavelength will be selected at a wavelength within +/- 10 nm of the maximum peak emission. In another embodiment, the pre-selected wavelength will be selected within +/- 30 nm of the maximum peak emission. In yet another embodiment, the pre-selected wavelength will be selected within +/- 50 mn of the maximum peak emission. In one exemplary embodiment, at least one of the pre-selected wavelengths will be in the range of about 300 to about 400 nm.

In one embodiment, the ratio of the fluorescence intensities will change during the authentication process by more than or equal to +/- 5% as compared to the original or initial fluorescence ratio. That is, the ratio of fluorescence intensities can exhibit an increase or decrease of 5% as compared to the original or initial value. In another embodiment, the change will be greater than or equal to about +/-25%. In yet another embodiment, the change will be greater than or equal to about +/-95%. In yet another embodiment, the change in fluorescence ratio will be between about 5% and about 200%.

In addition, the authenticating signal of the tagged polymers containing the optically variable tags may also be the changing intensity of the fluorescence emission of the optically variable tag.

The changes in fluorescence emission can be detected by observing changes in the complete emission spectrum or changes in local parts of the spectrum (i.e. by looking at the discrete intensity of the fluorescence emission at the peak location of the tag emission) over time.

In one exemplary embodiment the change in intensity will be evaluated over time as a function of the difference between intensity at a time T1 and a time T2, T2 being greater than T1. In embodiment, there will be a difference of at least 10% between the signals at T1 and T2. In one embodiment where the authenticating signal is repeatable, the difference between the signals at T1 and T2 will be from 10 to 90%, while in another embodiment, the difference will be from 15 to 75%. In one exemplary embodiment, a repeatable authenticating signal will have a difference of from 20 to 40%. In another embodiment where the authenticating signal is not repeatable, the difference between the signals at T1 and T2 will be from 10 to 100%.

The optically variable tag is added to the substrate polymer in an amount sufficient to be detected by fluorescence spectroscopy. In one embodiment, the optically variable tag will be present in the tagged polymer in an amount of no more than or equal to about 2 % by weight, based on the weight of the tagged polymer. In another embodiment, the optically variable tag will be present in the tagged polymer in an amount of less than or equal to about 10⁻¹⁸ % by weight, based on the total weight of the tagged polymer. In one exemplary embodiment, the optically variable tag will be present in the tagged polymer in an amount of less than or equal to about 10⁻¹² % by weight, based on the total weight of the tagged polymer. In yet another exemplary embodiment, the optically variable tag will be present in the tagged polymer in an amount of less than or equal to about 10⁻⁶ % by weight, based on the total weight of the tagged polymer. In one embodiment, the optically variable tag will be present in the tagged polymer in an amount of at least 0.0001% by weight, based on the total weight of the tagged polymer. In another embodiment, the optically variable tag will be present in a tagged polymer or article, such as an optical storage disk, at a loading between 0.0001 % and 0.05% by weight, based on the weight of the tagged polymer.

Non-optically variable compounds may optionally be used in the tagged polymers disclosed herein. In one exemplary embodiment, the non-optically variable compounds are fluorescent tags that are selected to enhance the signal from optically variable tags. Fluorescent tags as used herein refers to at least one of an organic fluorophore, an inorganic fluorophore, an organometallic fluorophore, a semiconducting luminescent nanoparticle, or combinations thereof. In addition, the fluorescent tags used are insensitive to polymer additives and to chemical and physical aging of the polymer.

In one exemplary embodiment, the fluorescent tags are selected from classes of dyes that exhibit high robustness against ambient environmental conditions and temperature stability of at least about 350°C, preferably at least about 375°C, and more preferably at least about 400°C. Typically, the fluorescent tags have temperature stability for a time period greater than or equal to about 20 seconds. In one embodiment, the fluorescent tags will have temperature stability for a time period greater than or equal to about 1 minute, while in another embodiment, the fluorescent tags will have temperature stability of greater than or equal to about 5 minutes. In one embodiment, the fluorescent tags will have temperature stability for a time period greater than or equal to about 10 minutes.

The concentration of the dynamic response authentication material depends on the quantum efficiency of the tagging material, excitation and emission wavelengths, and employed detection techniques, and can typically range from about 10⁻¹⁸ percent by weight to about 2 percent by weight of the tagged polymer, more typically range from about 10⁻¹⁵ percent by weight to about 0.5 percent by weight of the tagged polymer, and most typically range from about 10⁻¹² percent by weight to about 0.05 percent by weight of the tagged polymer. In one exemplary embodiment, the concentration of the dynamic response authentication material ranges from equal to about 10⁻⁵ percent to 0.5 percent by weight. In yet another exemplary embodiment, the concentration ranges from equal to about 10⁻³ to about 0.1 percent by weight.

Dynamic response analytical technique as used herein refers to a dynamic response analytical technique selected from the group consisting of fluorescence spectroscopy, luminescence spectroscopy, electronic spectroscopy, vibrational spectroscopy, color spectrophotometry, visual observation under specific lighting conditions, and combinations thereof. In one embodiment, the dynamic response analytical technique is selected from the group consisting of luminescence spectroscopy, fluorescence spectroscopy, visual observation under specific lighting conditions, while in another exemplary embodiment, the dynamic response analytical technique will include electronic spectroscopy, color spectrophotometry and vibrational spectroscopy.

In addition to the substrate polymer, compounds comprising forensic authentication markers and dynamic response authentication markers, the tagged polymer compositions disclosed herein may optionally include various additives ordinarily incorporated in resin compositions of this type. Such additives may include antioxidants, heat stabilizers, anti-static agents (tetra alkylammonium benzene sulfonate salts, tetra alkylphosphonium benzene sulfonate salts, and the like), mold releasing agents (pentaerythritol tetrastearate; glycerol monstearate, and the like), and the like, and combinations comprising the foregoing. For example, the tagged polymer composition can comprise heat stabilizer from about 0.01 weight percent to about 0.1 weight percent; an antistatic agent from about 0.01 weight percent to abut 1 weight percent; and a mold releasing agent from about 0.1 weight percent to about 1 weight percent of a mold releasing agent; based upon the total weight of the tagged polymer.

Some possible antioxidants include, for example, organophosphites, e.g., tris(nonylphenyl)phosphite, tris(2,4-di-t-butylphenyl)phosphite, bis(2,4-di-t-butylphenyl)pentaerythritol diphosphite, distearyl pentaerythritol diphosphite and the like; alkylated monophenols, polyphenols and alkylated reaction products of polyphenols with dienes, such as, for example, tetrakis[methylene(3,5-di-tert-butyl-4-hydroxyhydrocinnamate)]methane, 3,5-di-tert-butyl-4-hydroxyhydrocinnamate octadecyl, 2,4-di-tert-butylphenyl phosphite, and the like; butylated reaction products of para-cresol and dicyclopentadiene; alkylated hydroquinones; hydroxylated thiodiphenyl ethers; alkylidene-bisphenols; benzyl compounds; esters of beta-(3,5-di-tert-butyl-4-hydroxyphenyl)-propionic acid with monohydric or polyhydric alcohols; esters of beta-(5-tert-butyl-4-hydroxy-3-methylphenyl)-propionic acid with monohydric or polyhydric alcohols; esters of thioalkyl or thioaryl compounds, such as, for example, distearylthiopropionate, dilaurylthiopropionate, ditridecylthiodipropionate, and the like; amides of beta-(3,5-di-tert-butyl-4-hydroxyphenyl)-propionic acid; and the like, as well as combinations comprising a of the foregoing.

Other potential additives which may be employed comprise: UV absorbers; stabilizers such as light and thermal stabilizers (e.g., acidic phosphorous-based compounds); hindered phenols; zinc oxide, zinc sulfide particles, or combination thereof; lubricants (mineral oil, and the like), plasticizers, dyes used as a coloring material (quinines, azobenzenes, and the like); among others, as well as combinations comprising a of the foregoing additives. In a preferred embodiment where the dynamic response marker is a UV fluorophore, the additives must be selected so that interferences with the fluorophore excitation is avoided or at least minimized.

In order to aid in the processing of the tagged polymer, particularly when the polymer is polycarbonate, catalyst(s) may also be employed, namely in the extruder or other mixing device. The catalyst typically assists in controlling the viscosity of the resulting material. Possible catalysts include hydroxides, such as tetraalkylammonium hydroxide, tetraalkylphosphonium hydroxide, and the like, with diethyldimethylammonium hydroxide and tetrabutylphosphonium hydroxide preferred. The catalyst(s) can be employed alone or in combination with quenchers such as acids, such as phosphoric acid, and the like. Additionally, water may be injected into the polymer melt during compounding and removed as water vapor through a vent to remove residual volatile compounds.

The tagged polymer can be produced in one embodiment by using a reaction vessel capable of adequately mixing various precursors, such as a single or twin-screw extruder, kneader, blender, or the like.

Methods for incorporating the forensic authentication and dynamic response authentication markers into the substrate polymer include, for example, compounding, solution casting, admixing, blending, or copolymerization. The forensic authentication markers and dynamic response authentication markers can be incorporated into the polymer such that they are uniformly dispersed throughout the tagged polymer or such that they are dispersed on a portion of the tagged polymer.

In one embodiment a tagged polymer may be obtained by blending untagged polymer pellets with tagged pellets to obtain a lot of tagged polymer. Another possibility is the case of a tagged polymer where phase separation exists because of miscibility problems of some components and the marker has more affinity for one phase over the other. Another possibility is the use of a masterbatch of a polymer with dynamic response markers for those instances where the dynamic response markers are purposely not soluble in the substrate polymer (Examples include: luminescent particles of a visible size, particles such as metal flakes with hidden anti-counterfeiting characteristics such as an imprinted microscopic code only visible under microscope, special particles that exhibit a unique chromatic change depending on the viewing angle). Of course, the polymer used in the masterbatch will be miscible with the substrate polymer and will normally be selected from the list of suitable substrate polymers disclosed above.

In another embodiment, the forensic authentication markers and dynamic response authentication markers can be incorporated into the substrate polymer in the polymer manufacturing stage, during polymer processing into articles, or combinations thereof. It is possible to incorporate both types of authentication markers simultaneously or separately.

For example, the polymer precursors for the polymer can be premixed with the forensic authentication and dynamic response authentication markers (e.g., in a pellet, powder, and/or liquid form) and simultaneously fed into the extruder, or the forensic authentication and dynamic response authentication markers can be optionally added in the feed throat or through an alternate injection port of the injection molding machine or other molding. Optionally, the polymer can be produced and the forensic authentication and dynamic response authentication markers can be dispersed on a portion of the polymer.

In one embodiment, the forensic authentication markers will be incorporated into the polymer by compounding, admixing, blending or copolymerization. In one exemplary embodiment, the forensic authentication markers will be incorporated into the polymer by copolymerization.

In one embodiment, the dynamic response authentication markers will be incorporated into the polymer by compounding, admixing, blending or copolymerization. In one exemplary embodiment, the dynamic response authentication markers will be incorporated into the polymer by compounding.

In another embodiment, the forensic authentication and dynamic response authentication markers will be incorporated into the polymer by compounding of the tagged polymer. In another exemplary embodiment, the dynamic response authentication marker will be first compounded with the forensic marker to form a masterbatch (or concentrate). The masterbatch will then be fed to the extruder for incorporation into the substrate polymer during the compounding step of the tagged polymer.

When the substrate polymer precursors are employed, the extruder should be maintained at a sufficiently high temperature to melt the polymer precursors without causing decomposition thereof. For polycarbonate, for example, temperatures of about 220°C to about 360° C can be used, with about 260°C to about 320°C being used in one exemplary embodiment. Similarly, the residence time in the extruder should be controlled to minimize decomposition. Residence times of up to about 10 minutes or more can be employed, with up to about 5 minutes being used in one embodiment, up to about 2 minutes being used in another exemplary embodiment, and up to about 1 minute being employed in one exemplary embodiment. Prior to extrusion into the desired form (typically pellets, sheet, web, or the like, the mixture can optionally be filtered, such as by melt filtering and/or the use of a screen pack, or the like, to remove undesirable contaminants or decomposition products.

The tagged polymers may be used for any application in which the physical and chemical properties of the material are desired and can be used to provide a variety of tagged articles, i.e., polymer based or polymer containing articles that utilize the tagged polymer. Typically, the tagged polymers are used for data storage media. After the tagged polymer composition has been produced, it can be formed into a data storage media using various molding techniques, processing techniques, or combination thereof. Possible molding techniques include injection molding, film casting, extrusion, press molding, blow molding, stamping, and the like.

One possible process comprises an injection molding-compression technique where a mold is filled with a molten polymer. The mold may contain a preform, inserts, fillers, etc. The tagged polymer is cooled and, while still in an at least partially molten state, compressed to imprint the desired surface features (e.g., pits, grooves, edge features, smoothness, and the like), arranged in spiral concentric or other orientation, onto the desired portion(s) of the substrate or article, i.e. one or both sides in the desired areas. The substrate is then cooled to room temperature. Once the substrate has been produced, additional processing, such as electroplating, coating techniques (spin coating, spray coating, vapor deposition, screen printing, painting, dipping, and the like), lamination, sputtering, and combinations comprising a of the foregoing processing techniques, among others known in the art, may be employed to dispose desired layers on the substrate.

An example of a polycarbonate data storage media comprises an injection molded polycarbonate substrate that may optionally comprise a hollow (bubbles, cavity, and the like) or filled (metal, plastics, glass, ceramic, and the like, in various forms such as fibers, spheres, particles, and the like) core.

In one embodiment when a tagged polymer is formed into an article such as taa data storage media, the tagged polymer will preferably be used to form the substrate(s) that will be read through by a laser in a data storage media player device. The reason is that it is significantly more difficult to fake the response of a tagged polymer and ensure that the technology used does not impact playability of the media. In a data storage media having two substrates, such as a DVD, one or both substrates can be formed using the tagged polymers. In one exemplary embodiment, the substrate of a DVD formed of the tagged polymer will be the layer read by a laser in a DVD player device.

Disposed on the substrate are various layers including: a data layer, dielectric layer(s), a reflective layer(s), and/or a protective layer, as well as combinations comprising the foregoing layers. These layers comprise various materials and are disposed in accordance with the type of media produced. For example, for a first surface media, the layers may be protective layer, dielectric layer, data storage layer, dielectric layer, and then the reflective layer disposed in contact with the substrate, with an optional decorative layer disposed on the opposite side of the substrate. Meanwhile, for an optical media, the layers may be optional decorative layer, protective layer, reflective layer, dielectric layer, and data storage layer, with a subsequent dielectric layer in contact with the substrate. Optical media may include, but is not limited to, any conventional pre-recorded, re-writable, or recordable formats such as: CD, CD-R, CD-RW, DVD, DVD-R, DVD-RW, DVD+RW, DVD-RAM, high-density DVD, magneto-optical, and others. It is understood that the form of the media is not limited to disk-shape, but may be any shape which can be accommodated in a readout device.

The tagged polymer may be used on either side but in one exemplary embodiment, the tagged polymer will be employed in the read side because it is more technically challenging to develop tagged polymers that do not impact playability. In another exemplary embodiment, when the article is a DVD, it is desirable to use tagged polymers for both substrates. The tagged polymers can be either the same or different but in one exemplary embodiment will be different and will provide different authenticating information.

The data storage layer(s) may comprise any material capable of storing retrievable data, such as an optical layer, magnetic layer, or a magneto-optic layer. Typically the data layer has a thickness of up to about 600 Angstroms (Å) or so, with a thickness up to about 300 Å preferred. Possible data storage layers include, but are not limited to, oxides (such as silicone oxide), rare earth elements-transition metal alloys, nickel, cobalt, chromium, tantalum, platinum, terbium, gadolinium, iron, boron, others, and alloys and combinations comprising a of the foregoing, organic dye (e.g., cyanine or phthalocyanine type dyes), and inorganic phase change compounds (e.g., TeSeSn, InAgSb, and the like).

The protective layer(s), which protect against dust, oils, and other contaminants, can have a thickness of greater than about 100 microns (µ) to less than about 10 Å in one embodiment, with a thickness of about 300 Å or less in other embodiments, and a thickness of about 100 Å or less in other exemplary embodiments. The thickness of the protective layer(s) is usually determined, at least in part, by the type of read/write mechanism employed, e.g., magnetic, optic, or magneto-optic. Possible protective layers include anti-corrosive materials such as gold, silver, nitrides (e.g., silicon nitrides and aluminum nitrides, among others), carbides (e.g., silicon carbide and others), oxides (e.g., silicon dioxide and others), polymeric materials (e.g., polyacrylates or polycarbonates), carbon film (diamond, diamond-like carbon, and the like), among others, and combinations comprising a of the foregoing.

The dielectric layer(s), which are disposed on one or both sides of the data storage layer and are often employed as heat controllers, can typically have a thickness of up to or exceeding about 1,000 Å and as low as about 200 Å or less. Possible dielectric layers include nitrides (e.g., silicon nitride, aluminum nitride, and others); oxides (e.g., aluminum oxide); carbides (e.g., silicon carbide); and combinations comprising the foregoing materials, among other materials compatible within the environment and preferably not reactive with the surrounding layers.

The reflective layer(s) should have a sufficient thickness to reflect a sufficient amount of energy (e.g., light) to enable data retrieval. Typically the reflective layer(s) can have a thickness of up to about 700 Å or so, with a thickness of about 300 Å to about 600 Å being used in some exemplary embodiments. Possible reflective layers include any material capable of reflecting the particular energy field, including metals (e.g., aluminum, silver, gold, titanium, and alloys and mixtures comprising a of the foregoing metals, and others). Semi-reflective layers in multi-layered DVDs (such as DVD-9, DVD-14 and DVD-18) typically have a thickness between 3 and 10 nm, and more commonly 4 to 7 nm. The materials used are generally the same as for the reflective layers.

In addition to the data storage layer(s), dielectric layer(s), protective layer(s) and reflective layer(s), other layers can be employed such as lubrication layer and others. Useful lubricants include fluoro compounds, especially fluoro oils and greases, and the like.

### EXAMPLES

### Example 1:

An illustrative polycarbonate composition prepared according to the disclosed method having a multi-level tagging system containing both forensic and dynamic response authentication markers is given in Table 1. In this particular example, optical quality polycarbonate with an average molecular weight of 17,700 units is used as the base resin and, additionally, a General Electric proprietary copolymer composed of Dimethyl Bisphenol Cyclohexane (DMBPC) and Bisphenol-A based polycarbonate is used as compound comprising a forensic authentication marker. A UV-excitable long Stokes shift fluorophore emitting in the green region of the electromagnetic spectrum was obtained from Honeywell (Seelze, Germany) and used as the dynamic response authentication marker.

**Table 1. Composition of formulation used in multilevel tagging system**

| Components | Formulation A | Formulation B |
|---|---|---|
| | (parts by weight) | (parts by weight) |
| Polycarbonate resin (average molecular weight Mw of 17,700 determined by Gel Penneation Chromatography (GPC) against absolute PC standards) | 100 | 90 |
| DMBPC-BPA PC copolymer (25% DMBPC) | | 10 |
| Glycerol monostearate (Riken Vitamin Co.) | 0.03 | 0.03 |
| Bis (2,4-dicumylphenyl) pentaerythritol diphosphite (Dover Chemical Corporation) | 0.02 | 0.02 |
| Green emitting long Stokes shift UV fluorophore dye | | 0.05 |
| yellow methine dye | 0.07 | 0.07 |
| orange methine dye | 0.0066 | 0.0066 |

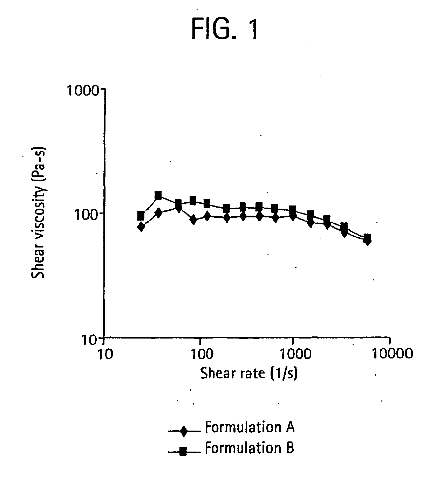

Formulations A and B were extruded on a 30mm twin-screw extruder at a melt temperature of 290°C. The pellets were then molded into color plaques having step thicknesses of 0.6mm and 1.2mm. Shear viscosity versus shear rate curves were generated to compare the flow behavior of the two formulations. All rheological data were measured at 300°C on a capillary rheometer and are set forth in a graphical representation of shear viscosity versus shear rate. (Figure 1). The viscosities of the two materials overlap and shear thinning onsets at the same shear rate indicating that the addition of forensic and dynamic response authentication markers does not affect material properties of the polycarbonate. The same conclusion can be drawn from the fact that the melt flow of the two formulations differs by less than about 7% which does not correspond to a significant difference: melt volume rate of Formulation A at 250°C (ASTM D1238) = 9.72 g/10min; melt volume rate of Formulation B at 250°C (ASTM D1238)= 10.39 g/10min.

### Example 2:

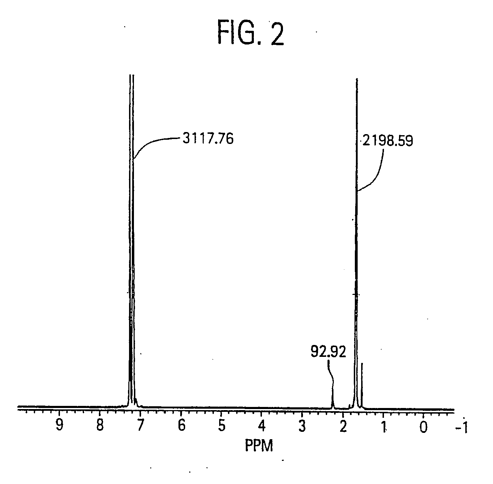

The results of an identification of forensic authentication markers according to the disclosed methods are set forth in Figure 2. Solution state proton nuclear magnetic resonance (NMR) spectroscopy was used to quantify the type and quantity of the forensic authentication marker of Formulation B, i.e. DMBPC copolymer. Pellet samples were dissolved in approximately 1.5ml of deuterated chloroform (99% purity) and then analyzed by a Varian Mercury-400 spectrometer.

The characteristic peaks attributable to the methyl groups on the DMBPC species were then mathematically analyzed and the concentration was determined to be approximately 2.5% by weight. This is in line with the value originally targeted by using a 25 wt% DMBPC-BPA copolymer at 10% loading in Formulation B. The chosen value for the loading was for illustrative purposes only. From a practical point of view, the minimum possible loading that can give distinct spectral determination would be used. This however depends on the type of forensic authentication marker as well as the forensic analytical technique used in the disclosed method.

### Example 3:

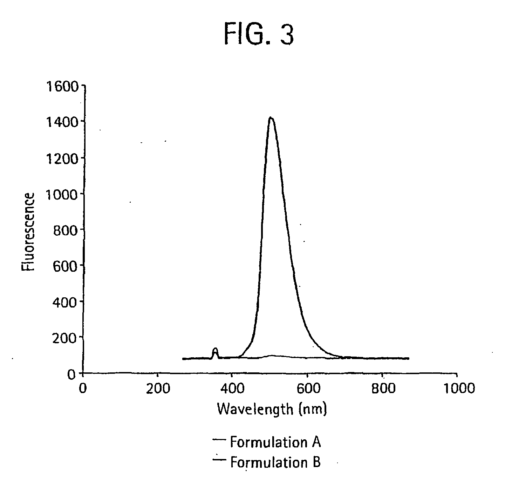

The results of an identification of dynamic response authentication markers according to the disclosed methods are set forth in Figure 3. Fluorescence emission spectra of UV fluorophore were measured on a setup, which included a miniature laser light source (Nanolase, France, 355 nm emission wavelength) and a portable spectrofluorometer (Ocean Optics, Inc., Dunedin, FL, Model ST2000). The spectrofluorometer was equipped with a 200-µm slit, 600-grooves/mm grating blazed at 400 nm and covering the spectral range from 250 to 800 nm with efficiency greater than 30%, and a linear CCD-array detector. Light from the laser was focused into one of the arms of a "six-around-one" bifurcated fiber-optic reflection probe (Ocean Optics, Inc., Model R400-7-UV/VIS). Light from the samples was collected when the common end of the fiber-optic probe was positioned near the samples at a certain angle to minimize the amount of light directly reflected from the sample back into the probe. The second arm of the probe was coupled to the spectrofluorometer. Figure 3 clearly shows the fluorescent emission of the long Stokes shift UV fluorophore incorporated in Formulation B versus the flat spectrum of Formulation A.

Color (CIE Lab color space) and transmission values were measured on the color plaques in transmission mode using a MacBeth Coloreye 7000A spectrophotometer under D65 illuminant and a 10-degree observer. Comparative color and transmission values of Formulation A and B in 0.6mm are set forth below in Table 2.

**Table 2. Comparative color and transmission values of Formulation A and B in 0.6mm**

| | Color Data (CIELab system) | | | | %T@ 650 nm (0.6mm) | %T@ 780nm (0.6mm) |
|---|---|---|---|---|---|---|
| | D65, 10° observer | | | | | |
| | L* | a* | b* | □E | | |
| Formulation A | 88.79 | -4.78 | 102.10 | | 90.20 | 90.34 |
| Formulation B | 89.50 | -6.80 | 100.78 | 2.5 | 90.25 | 90.34 |

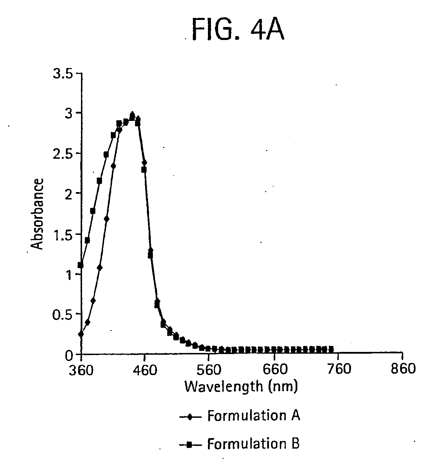

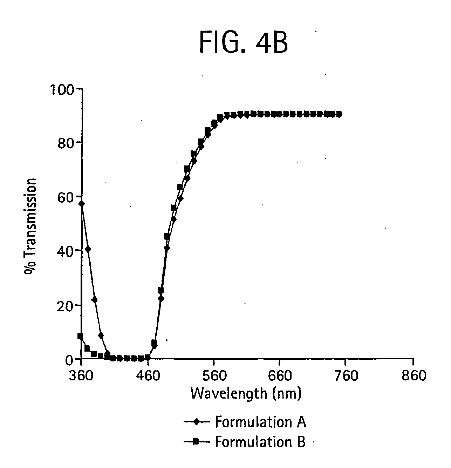

From Table 2, it can be seen that the two formulations are within 2.5 ΔE units of each other indicating that there is no significant visual difference under a D65 illuminant and a 10-degree observer. % Transmission values at 650nm and 780nm (primary laser wavelengths used in CD and DVD players) are also unaffected by the addition of a compound having a forensic authentication marker and a dynamic response authentication marker (c). In fact, addition of the fluorophore affects only the UV region of the absorption/transmission spectrum (up to 450nm) as shown in Figure 4a and 4b.

The methods and articles disclosed herein provide a multi-level tagging method useful in the authentication and confirmation of the source and identify of polymer-based substrates, especially polycarbonate based materials and of articles made from such substrates.

The presence of forensic authentication markers provides a taggant that will generally be available only to legitimate producers of data storage media and data storage media substrates. In addition, the nature of the forensic authentication markers ensures that they are detectable only with the use of relatively sophisticated forensic analytical techniques. Thus, the forensic authentication markers function as 'hidden' taggants that are generally invisible to counterfeiters and illegitimate producers and sellers.

The presence of both forensic authentication and dynamic response authentication markers in a particular substrate or data storage media provides for a multi-level determination that results in the optimal use of resources. By using both a 'hidden' forensic authentication marker and a dynamic response authentication marker, counterfeiters and illegitimate producers and sellers may be more readily identified and apprehended.

## Claims

1. A method of authenticating that a test polymer is a tagged polymer, said tagged polymer comprising
a substrate polymer,
a compound comprising a forensic authentication marker selected from the group consisting of at least one of alkyl groups of 2 or more carbon atoms, cycloaliphatic groups of 3 or more carbon atoms,-OCH₃ groups,-CH₃Si groups, methyl groups attached to an aryl moiety, divalent substituted phenol groups, and terminal substituted phenol groups, and
a dynamic response authentication marker selected from the group consisting of spectroscopic tags, thermochromic compounds and optically variable tags,
said forensic authentication marker being present in the tagged polymer in an amount sufficient to be detected by a forensic analytical technique selected from the group consisting of nuclear magnetic resonance (NMR), electron spin resonance (ESR), x-ray photon electron spectroscopy-electron spectroscopy for chemical analysis (XPS-ESCA), energy dispersive x-ray spectroscopy (EDX) coupled to scanning electron microscopy (SEM- EDX) and atomic absorption and
said dynamic response authentication marker being present in an amount sufficient to be detected by a dynamic response analytical technique selected from the group consisting of fluorescence spectroscopy, luminescence spectroscopy, electronic spectroscopy, vibrational spectroscopy, color spectrophotometry, visual observation under specific lighting conditions and combinations thereof, said method comprising
testing the test polymer for the forensic authentication marker using the forensic analytical technique,
testing the test polymer for the dynamic response authentication marker using the dynamic response analytical technique, and
authenticating that a test polymer is a tagged polymer if the forensic authentication marker and dynamic response authentication marker are detected.

2. The method of claim 1 wherein the compound comprising the forensic authentication marker is present in the tagged polymer in an amount that does not affect an optical or rheological property of the substrate polymer.

3. The method of claim 1 wherein the forensic analytical technique is NMR and the dynamic response analytical technique is selected from the group consisting of luminescence spectroscopy and fluorescence spectroscopy.

4. The method of claim 1 wherein the forensic authentication marker is present in the tagged polymer in an amount of no more than about 10 weight percent, based on the total weight of the tagged polymer.

5. The method of claim 1 wherein the forensic authentication marker is present in the tagged polymer in an amount of at least 0.005 weight percent, based on the total weight of the tagged polymer.

6. The method of claim 1 wherein the forensic authentication marker is selected from the group consisting of -(CH₂)-n, groups where n is a number of from 4 to 14.

7. The method of claim 1 wherein the forensic authentication marker is present in a polymer miscible with polycarbonate and is selected from the group consisting of DMBPC copolymer, DDDA copolymer, eugenolsiloxane-PC copolymer, ITR-PC copolymer, poly(1,4-cyclohexanedimethyl-1,4-cyclohexanedicarboxylate), poly (ethylene napthtalate), poly(butylene naphtalate), and poly(cyclohexanedimethanol-co-ethylene terephtalate) and combinations comprising at least one of the foregoing miscible polymers.

8. The method of claim 1 wherein the dynamic response authentication marker comprises a member selected from the group consisting of an organic fluorophore, an inorganic fluorophore, an organometallic fluorophore, a semi-conducting luminescent nanoparticle and mixtures thereof.

9. The method of claim 1 wherein the dynamic response authentication marker is present in the tagged polymer in an amount of about 10⁻¹⁸ to about 2 weight percent, based on the total weight of the tagged polymer.

10. The method of claim 1 wherein the test polymer is a molded article and is a data storage media.

11. The method of claim 1 further comprising forming a tagged article from said tagged polymer.

## Patentansprüche

1. Ein Verfahren zur Authentifizierung, dass ein Testpolymer ein markiertes Polymer ist, wobei das markierte Polymer Folgendes umfasst:
ein Substratpolymer;
eine Verbindung, die einen forensischen Authentifizierungsmarker umfasst, gewählt aus der Gruppe bestehend aus mindestens einer von Alkylgruppen von zwei oder mehr Kohlenstoffatomen, cycloaliphatischen Gruppen von drei oder mehr Kohlenstoffatomen, -OCH₃-Gruppen, -CH₃Si-Gruppen, Methylgruppen, angeheftet an einen Arylanteil, zweiwertigen substituierten Phenolgruppen und endständig substituierten Phenolgruppen, und
einen dynamischen Antwort-Authentifizierungsmarker, gewählt aus der Gruppe bestehend aus spektroskopischen Markern, thermochromen Verbindungen und optisch variablen Markern,
wobei der forensische Authentifizierungsmarker im markierten Polymer in einer Menge vorhanden ist, die ausreicht, um von einem forensischen Analyseverfahren nachgewiesen zu werden, das gewählt ist aus der Gruppe bestehend aus kernmagnetischer Resonanz (Nuclear Magnetic Resonance, NMR), Elektronenspinresonanz (ESR), Röntgenstrahl-angelegter Photoelektronen-Spektroskopie - Electron Spectroscopy for Chemical Analysis (XPS-ESCA), Energie-dispersiver Röntgenspektroskopie (Energy Dispersive X-Ray Spectroscopy, EDX), gekoppelt mit Rasterelektronenmikroskopie (SEM-EDX) und atomarer Absorption, und
wobei der dynamische Antwort-Authentifizierungsmarker in einer Menge vorhanden ist, die ausreicht, um von einem dynamischen Antwort-Analyseverfahren nachgewiesen zu werden, das gewählt ist aus der Gruppe bestehend aus Fluoreszenz-Spektroskopie, Lumineszenz-Spektroskopie, Elektronenanregungs-Spektroskopie, Schwingungs-Spektroskopie, Farb-Spektroskopie, visueller Beobachtung unter bestimmten Beleuchtungsbedingungen und Kombinationen davon, wobei das Verfahren Folgendes umfasst:
Prüfen des Testpolymers auf den forensischen Authentifizierungsmarker hin mit Hilfe des forensischen Analyseverfahrens,
Prüfen des Testpolymers auf den dynamischen Antwort-Authentififizierungs-Marker mit Hilfe des dynamischen Antwort-Analyseverfahrens und
Authentifizierung, dass ein Testpolymer ein markiertes Polymer ist, wenn der forensische Authentifizierungsmarker und der dynamische Antwort-Authentifizierungsmarker nachgewiesen werden.

2. Das Verfahren gemäß Anspruch 1, worin die Verbindung, die den forensischen Authentifizierungsmarker umfasst, im markierten Polymer in einer Menge vorhanden ist, welche eine optische oder rheologische Eigenschaft des Substratpolymers nicht beeinträchtigt.

3. Das Verfahren gemäß Anspruch 1, worin das forensische Analyseverfahren NMR ist und das dynamische Antwort-Analyseverfahren gewählt ist aus der Gruppe bestehend aus Lumineszenz-Spektroskopie und Fluoreszenz-Spektroskopie.

4. das Verfahren gemäß Anspruch 1, worin der forensische Authentifizierungsmarker im markierten Polymer in einer Menge von nicht mehr als ungefähr 10 Gewichtsprozent, basierend auf dem Gesamtgewicht des markierten Polymers, vorhanden ist.

5. Das Verfahren gemäß Anspruch 1, worin der forensische Authentifizierungsmarker im markierten Polymer in einer Menge von mindestens 0,005 Gewichtsprozent, basierend auf dem Gesamtgewicht des markierten Polmers, vorhanden ist.

6. Das Verfahren gemäß Anspruch 1, worin der forensische Authentifizierungsmarker gewählt ist aus der Gruppe bestehend aus -(CH₂)-n-Gruppen, worin n eine Zahl von 4 bis 14 ist.

7. Das Verfahren gemäß Anspruch 1, worin der forensische Authentifizierungsmarker in einem Polymer vorhanden ist, das mit Polycarbonat mischbar ist, und gewählt ist aus der Gruppe bestehend aus DMBPC-Copolmer, DDDA-Copolymer, Eugenolsiloxan-PC-Copolymer, ITR-PC-Copolymer, poly(1,4-Cyclohexandimethyl-1,4-cyclohexandicarboxylat), poly(Ethylennaphthalat), poly(Butylennaphthalat) und poly(Cyclohexandimethanol-co-ethylenterephthalat) und Kombinationen, die mindestens eins der oben stehenden mischbaren Polymere umfassen.

8. Das Verfahren gemäß Anspruch 1, worin der dynamische Antwort-Authentifizierungsmarker ein Glied umfasst, das gewählt ist aus der Gruppe bestehend aus einem organischen Fluorophor, einem anorganischen Fluorophor, einem organometallischen Fluorophor, einem lumineszenten Halbleiter-Nanopartikel und Mischungen davon.

9. Das Verfahren gemäß Anspruch 1, worin der dynamische Antwort-Authentifizierungsmarker im markierten Polymer in einer Menge von ungefähr 10⁻¹⁸ bis ungefähr 2 Gewichtsprozent, basierend auf dem Gesamtgewicht des markierten Polymers, vorhanden ist.

10. Das Verfahren gemäß Anspruch 1, worin das Testpolymer ein geformter Artikel und ein Datenspeichermedium ist.

11. Das Verfahren gemäß Anspruch 1, das weiter das Formen eines markierten Artikels aus dem markierten Polymer umfasst.

## Revendications

1. Procédé pour authentifier qu'un polymère d'essai est un polymère marqué, ledit polymère marqué comprenant
un polymère substrat,
un composé comprenant un marqueur d'authentification légale choisi dans le groupe constitué par au moins l'un des groupes alkyle de 2 atomes de carbone ou plus, des groupes cycloaliphatiques de 3 atomes de carbone ou plus, des groupes -OCH₃, des groupes -CH₃Si, des groupes méthyle attachés à un groupement aryle, des groupes phénol substitués divalents et des groupes phénol substitués terminaux, et
un marqueur d'authentification à réponse dynamique choisi dans le groupe constitué par les marqueurs spectroscopiques, les composés thermochromiques et les marqueurs optiquement variables,
ledit marqueur d'authentification légale étant présent dans le polymère marqué en quantité suffisante pour être détecté par une technique analytique légale choisie dans le groupe constitué par la résonance magnétique nucléaire (RMN), la résonance de spin électronique (RSE), la spectroscopie de photoélectrons X-spectroscopie électronique pour analyse chimique (XPS-ESCA), la spectroscopie à dispersion d'énergie (EDX) couplée à la microscopie électronique à balayage (SEM-EDX) et l'absorption atomique et
ledit marqueur d'authentification à réponse dynamique étant présent en quantité suffisante pour être détecté par une technique analytique à réponse dynamique choisie dans le groupe constitué par la spectroscopie de fluorescence, la spectroscopie de luminescence, la spectroscopie électronique, la spectroscopie vibrationnelle, la spectrophotométrie couleur, une observation visuelle dans des conditions d'éclairage spécifiques et des combinaisons de celles-ci, ledit procédé comprenant
la mise à l'essai du polymère d'essai pour le marqueur d'authentification légale en utilisant la technique analytique légale,
la mise à l'essai du polymère d'essai pour le marqueur d'authentification de réponse dynamique en utilisant la technique analytique à réponse dynamique, et
le fait d'authentifier qu'un polymère d'essai est un polymère marqué si le marqueur d'authentification légale et le marqueur d'authentification à réponse dynamique sont détectés.

2. Procédé selon la revendication 1, dans lequel le composé comprenant le marqueur d'authentification légale est présent dans le polymère marqué en une quantité qui n'affecte pas une propriété optique ou rhéologique du polymère substrat.

3. Procédé selon la revendication 1, dans lequel la technique analytique légale est la RMN et la technique analytique à réponse dynamique est choisie dans le groupe constitué par la spectroscopie de luminescence et la spectroscopie de fluorescence.

4. Procédé selon la revendication 1, dans lequel le marqueur d'authentification légale est présent dans le polymère marqué en une quantité non supérieure à environ 10 pour cent en poids, par rapport au poids total du polymère marqué.

5. Procédé selon la revendication 1, dans lequel le marqueur d'authentification légale est présent dans le polymère marqué en une quantité d'au moins 0,005 pour cent en poids, par rapport au poids total du polymère marqué.

6. Procédé selon la revendication 1, dans lequel le marqueur d'authentification légale est choisi dans le groupe constitué par des groupes -(CH₂)-n où n est un nombre allant de 4 à 14.

7. Procédé selon la revendication 1, dans lequel le marqueur d'authentification légale est présent dans un polymère miscible avec du polycarbonate et est choisi dans le groupe constitué par un copolymère de DMBPC, un copolymère de DDDA, un copolymère d'eugénolsiloxoxane-PC, un copolymère d'ITR-PC, le poly(1,4-cyclohexanedicarboxylate de 1,4-cyclohexanediméthyle), le poly(naphtalate d'éthylène), le poly(naphtalate de butylène), et le poly(cyclohexanediméthanol-co-téréphtalate d'éthylène) et des combinaisons comprenant au moins l'un des polymères miscibles précités.

8. Procédé selon la revendication 1, dans lequel le marqueur d'authentification à réponse dynamique comprend un élément choisi dans le groupe constitué par un fluorophore organique, un fluorophore inorganique, un fluorophore organométallique, une nanoparticule semiconductrice luminescente et des mélanges de ceux-ci.

9. Procédé selon la revendication 1, dans lequel le marqueur d'authentification à réponse dynamique est présent dans le polymère marqué en une quantité allant d'environ 10⁻¹⁸ à environ 2 pour cent en poids, par rapport au poids total du polymère marqué.

10. Procédé selon la revendication 1, dans lequel le polymère d'essai est un article moulé et est un support de stockage de données.

11. Procédé selon la revendication 1, comprenant en outre la formation d'un article marqué à partir dudit polymère marqué.
